# EUROPEAN PATENT APPLICATION

(11) **EP 4 496 288 A1**
(43) Date of publication of application: **22.01.2025**
(21) Application number: 23771146.0
(22) Date of filing: 17.03.2023
(51) Int. Cl.: H04L 47/2475, H04L 67/61, H04L 67/131, H04W 28/02, H04W 28/10, G06F 3/01

(54) **METHOD AND DEVICE FOR PROCESSING APPLICATION DATA FLOW**

(30) Priority: 18.03.2022 KR 20220034052; 15.03.2023 KR 20230034109
(71) Applicant: KT Corporation, Seongnam-si, Gyeonggi-do 13606 (KR)
(72) Inventor: HONG, Sung Pyo, Seongnam-si Gyeonggi-do 13606 (KR)
(74) Representative: AWA Switzerland
(86) International application number: PCT/KR2023/003615
(87) International publication number: WO 2023/177268

(57) **Abstract**

Provided are a method and apparatus for processing data flow generated at an application level. The method of a user equipment for processing application data flow may include receiving an upper layer message including wireless resource configuration information associated with help information about application traffic characteristics and/or PDU set information; applying the wireless resource configuration information to the user equipment; and using the wireless resource configuration information so as to transmit/receive user plane data generated at an application layer.

## Description

### Technical Field

The disclosure relates to a technology for processing a data flow generated at an application level.

### Background Art

extended reality (XR) and cloud gaming (CG) are broad terms referring to various types of augmented, virtual and mixed environments in human-machine and human-human communication performed with the help of handheld and wearable terminals. extended reality (XR) is used as a broad term encompassing augmented reality (AR), mixed reality (MR), and virtual reality (VR). Cloud gaming represents a use case in which most computations related to gaming are offloaded from a terminal to an edge or remote server. XR applications and cloud computing/gaming typically require high throughput and low latency.

Many XR and CG use cases are characterized by quasi-periodic traffic with a high data rate (having a possible jitter) in a downlink video stream. There are often paired with a frequent uplink transmission (e.g., pose/control updates) and/or uplink video stream. Both downlink and uplink traffic must adhere to a relatively strict packet delay budget (PDB).

Further, many XR and CG terminals have limited battery power. However, the current UE discontinuous reception (DRX) configuration is unsuitable due to the non-integer period of XR traffic, variable XR data rate, and the quasi-periodic nature of XR period.

Further, data of a service set such as XR and CG has diversity and, even when a corresponding service is operated through a radio network, the data stream may be dynamically changed.

Thus, packets within one frame have dependency on each other. Nevertheless, the application data flow in the typical radio network may not reflect the dependency between packets and high dynamic variability.

### Detailed Description of the Invention

### Technical Problem

In the foregoing background, the disclosure provides a procedure for controlling packet processing based on unit information generated at an application level.

### Technical Solution

In an aspect, the disclosure may provide a method for processing an application data flow by a user equipment (UE). The method may include receiving a higher layer message including radio resource configuration information associated with at least one of assistance information for an application traffic characteristic and PDU set information, applying the radio resource configuration information to the UE, and transmitting/receiving user plane data generated in an application layer using the radio resource configuration information.

In another aspect, the disclosure may provide a method for processing an application data flow by a base station. The method may include receiving, from a core network control plane entity, at least one piece of information among assistance information for an application traffic characteristic, a PDU set QoS parameter, identification information for associating a flow belonging to a multi-modal service, and synchronization threshold information, transmitting, to a UE, a higher layer message including radio resource configuration information associated with at least one of the assistance information for the application traffic characteristic and PDU set information, and controlling transmission and reception of user plane data generated in an application layer using the radio resource configuration information.

In another aspect, the disclosure may provide a user equipment (UE) processing an application data flow. The UE may include a receiver receiving a higher layer message including radio resource configuration information associated with at least one of assistance information for an application traffic characteristic and PDU set information, and a controller applying the radio resource configuration information to the UE and controlling to transmit/receive user plane data generated in an application layer using the radio resource configuration information.

In another aspect, the disclosure may provide a base station processing an application data flow. The base station may include a receiver receiving, from a core network control plane entity, at least one information among assistance information for an application traffic characteristic, a PDU Set QoS parameter, identification information for associating a flow belonging to a multi-modal service and synchronization threshold information, transmitter transmitting a higher layer message including radio resource configuration information associated with at least one of the assistance information for the application traffic characteristic and the PDU set information to a UE, and a controller controlling to transmit/receive user plane data generated in an application layer using the radio resource configuration information.

### Advantageous Effects

According to the embodiments, packet processing may be controlled based on unit information generated at an application level.

### Brief Description of Drawings

FIG. 1 is a view schematically illustrating an NR wireless communication system in accordance with embodiments of the present disclosure;
FIG. 2 is a view schematically illustrating a frame structure in an NR system in accordance with embodiments of the present disclosure.
FIG. 3 is a view for explaining resource grids supported by a radio access technology in accordance with embodiments of the present disclosure;
FIG. 4 is a view for explaining bandwidth parts supported by a radio access technology in accordance with embodiments of the present disclosure;
FIG. 5 is a view illustrating an example of a synchronization signal block in a radio access technology in accordance with embodiments of the present disclosure;
FIG. 6 is a signal diagram for explaining a random access procedure in a radio access technology in accordance with embodiments of the present disclosure;
FIG. 7 is a view for explaining CORESET;
FIG. 8 is a view illustrating an example of a structure for implementing a 5G-XR function in a 5G system;
FIG. 9 is a flowchart illustrating operations of a UE according to an embodiment;
FIG. 10 is a flowchart for describing operations of a base station according to an embodiment;
FIG. 11 illustrates an example of downlink traffic for an application;
FIG. 12 illustrates an example of generation of downlink traffic for an application;
FIG. 13 is a block diagram illustrating a UE according to an embodiment; and
FIG. 14 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

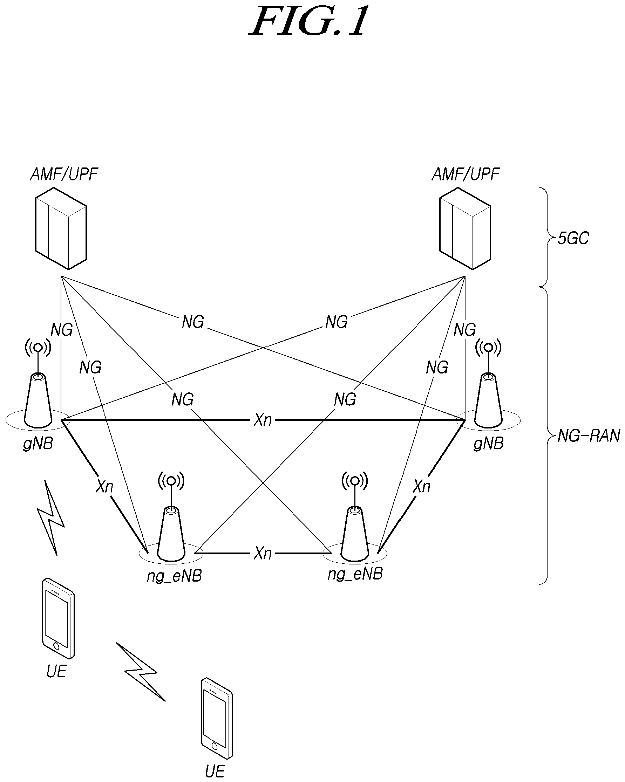

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

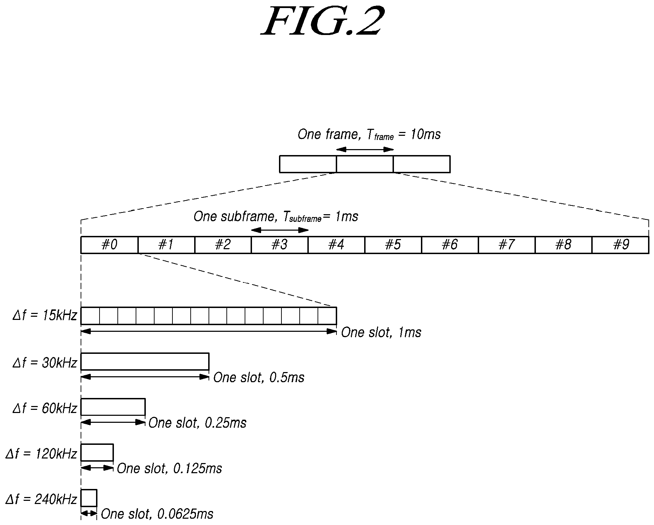

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

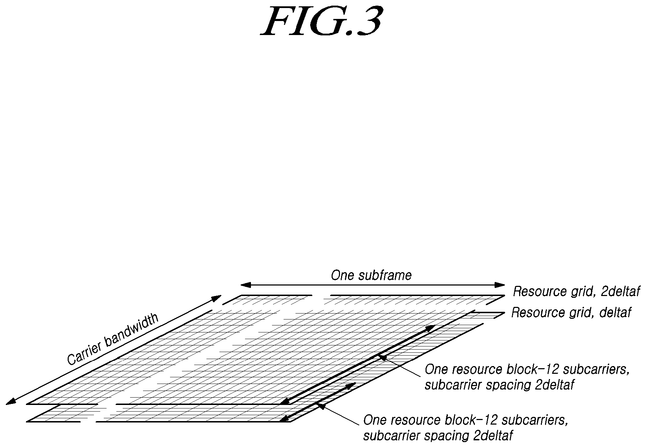

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

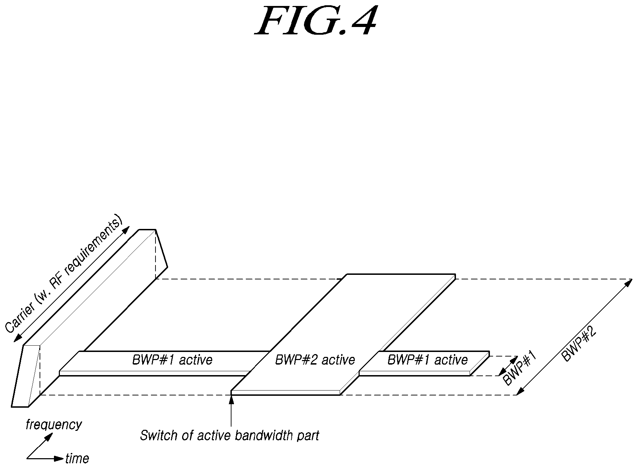

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

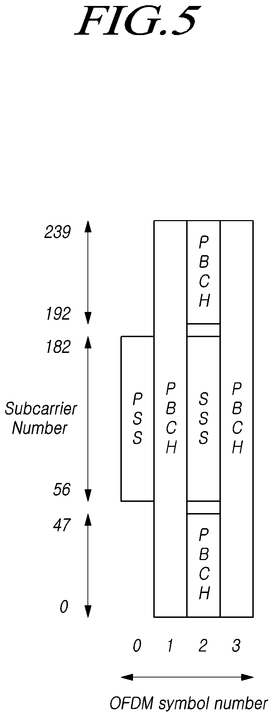

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB 1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

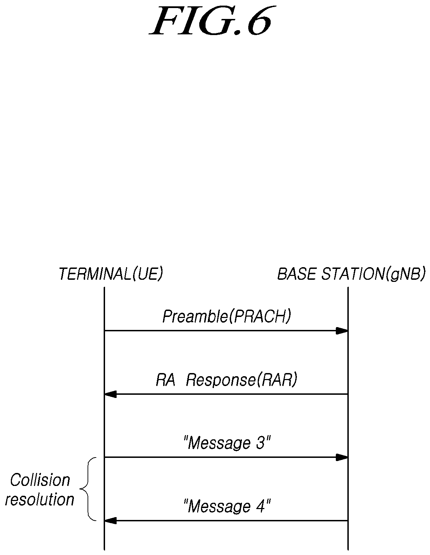

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

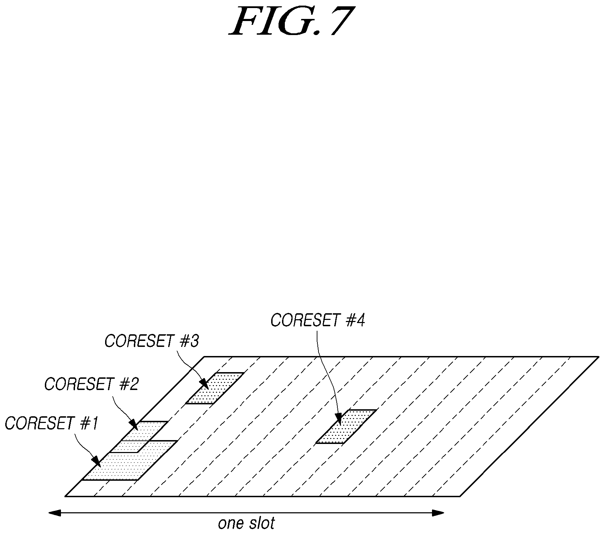

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

The XR and CG service sets have diversity. Data streams (e.g., video) may dynamically change while the service is running through a radio network (e.g., NR).

Further, packets within one frame may have dependency on each other. The application may require all of the packets to decode a corresponding frame. Loss of one packet may, although other correlated packets are successfully transmitted, render the corresponding packets useless. For example, requirements may be imposed on XR applications in terms of application data units (ADUs)/media units rather than single packets/PDUs. Packets even at different positions in different frame types (I/P frame) or groups of picture (GoP) although they are in the same video stream may have different contributions to user experience. Accordingly, layered QoS handling in the video stream may loosen requirements and lead to higher efficiency.

If additional information from the application layer may be utilized on the running service/application, it may be useful for making it easier to select a radio parameter. However, there is no specific method for the UE/base station/core network to effectively recognize and process the characteristics of XR application traffic.

For the multi-modal communication service, there are a plurality of flows providing one application including a video stream, an audio stream, a haptic stream for haptic feedback and sensing information, and the like. Application client(s) for different types of data for one application may be positioned in one UE. Alternatively, there may be a plurality of types of devices. For example, there may be VR glasses, gloves, and other devices that support haptic and/or kinaesthetic modality. These devices may be connected to one UE by wire, and the corresponding UE may access the 5G system. If multi-modal data related to a specific application for the corresponding single UE is not transferred to the user at a similar time, it may negatively affect the user experience. However, there is no method provided for transferring or processing multi-modal data at a similar time in the current mobile communication network.

As such, in the typical mobile communication network, a procedure for controlling packet processing based on unit information generated at an application level is not provided.

In other words, the typical mobile communication technology does not provide a method or a related procedure in which the UE/base station/core network may effectively recognize and process corresponding traffic based on unit information generated at an application level.

The disclosure, conceived to address such issues proposes a session/QoS/policy control method and device for providing packet processing based on information generated at an application layer.

In the disclosure, a control method is described based on 5GS/NR technology. However, this is for convenience of description. The embodiments are not limited thereto. For example, the embodiments may be applied to any system/radio access technology (e.g., LTE, 6G). Embodiments described in the disclosure include information elements specified in the NR/5GS standards (e.g., TS 38.321 as a MAC standard, TS 38.331 as an NR RRC standard, TS 23.501 as a 5G system structure standard, TS 23.502 as a 5G system procedure standard, etc.) and the content of operations. Although the disclosure does not contain the content of the UE operation related to the definitions for the corresponding information elements, the corresponding content set forth in the standards which are known art may be incorporated in the present embodiments.

Further, in the disclosure, an XR or CG application is described as an example of the application. However, this is for convenience of understanding. The embodiments are not limited thereto. For example, the embodiments may be applied to data processing at a specific application level.

Any function described below is defined as an individual-UE capability (UE radio capability or UE core network capability) and may be transmitted by the UE to the base station/core network entity (e.g. AMF/SMF) through corresponding signaling. Alternatively, functions may be combined/merged to be defined as the corresponding UE capability and transmitted to the base station/core network entity through corresponding signaling by the UE.

In any function described below, information indicating that the base station supports the corresponding function, or information allowing the corresponding function, or information indicating the corresponding function may be indicated to the UE through explicit indication information through one of higher layer signaling (e.g., RRC signaling)/MAC signaling/DCI. Alternatively, in any function described below, information for indicating that the core network entity/entity (e.g., AMF/SMF/dedicated Network-Function) supports the corresponding function, information allowing the corresponding function, or information indicating the corresponding function may be indicated to the UE through explicit indication information through NAS signaling.

For convenience of description, a unit divided by the application/application layer, or a unit divided within the application, or a unit having a correlation between data/stream/packets in one application, or a unit having dependency between data/stream/packets in one application or a unit divided with different traffic characteristics/streams within one flow, a unit divided with different traffic characteristics/streams within one PDU session, or a unit divided based on any information/field/metadata included/used/added in the application, or PDUs carrying the payload of one unit information generated at the application level is denoted as a PDU Set. This is only for convenience of description, and it may be replaced with any other term such as an application data unit (ADU), an application unit, a media unit (MU), an application packet data unit, a group of picture (GoP) unit, a traffic type (e.g., XR viewer pose information unit, tactile information, video, audio, degree of freedom) specific unit, frame type, stream type, or the like.

One PDU Set is constituted of one or more PDUs that carry one unit information generated at the application level through the payload, and the corresponding PDUs have the same importance requirements at the application layer. All the PDUs in one PDU Set are required to use the corresponding unit information by the application layer. (A PDU Set is composed of one or more PDUs carrying the payload of one unit of information generated at the application level (e.g., a frame or video slice for XRM Services), which are of same importance requirement at application layer. All PDUs in a PDU Set are needed by the application layer to use the corresponding unit of information.). For example, PDU set may be understood as a concept similar to video slice. The video slice is a region spatially divided in one video frame, and the video slice is encoded by being separated from other regions in the same frame.

The functions described below may be performed individually and independently. Functions described below may be arbitrarily combined/merged and it is obvious that they are also included in the scope of embodiments.

Any information about the XR application described below may be traffic characteristic information (e.g., any statistics/statistical quantity such as expected value/average, deviation, standard deviation, etc.) statistically/empirically obtained/calculated/derived by the UE/network. Alternatively, it may be information preconfigured in the UE/network or provisioned through OAM/application server/application function/UDM.

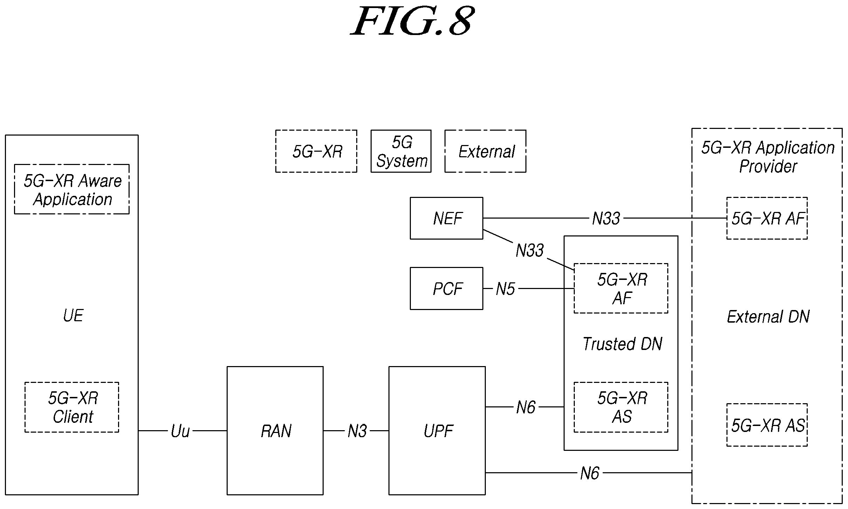

FIG. 8 is a view illustrating an example of a structure for implementing a 5G-XR function in a 5G system.

For convenience of description, the embodiments will be described based on FIG. 8, However, the embodiments are not limited thereto. As described above, the embodiments may be applied to any system/radio access technology (e.g., LTE or 6G).

Referring to FIG. 8, the 5G-XR AF indicates an application function for a 5G-XR service. 5G-XR AS indicates an application server for a 5G-XR service. 5G-XR client indicates an internal function of a UE for a 5G-XR service. In the UE, the XR client may indicate a transceiver of an XR session accessed through APIs or the like by an XR application. The XR client may perform communicate/signaling with the 5G-XR AF to configure/control/support an XR session (or delivery of the XR session). The XR client may access XR data and communicate with the 5G-XR AS to process corresponding data. The 5G-XR AF provides various control functions for processing the XR session on the UE, and the 5G-XR AF may perform signaling with PCF/NEF for QoS control. The 5G-XR AS indicates an application server that hosts 5G XR media and media functions.

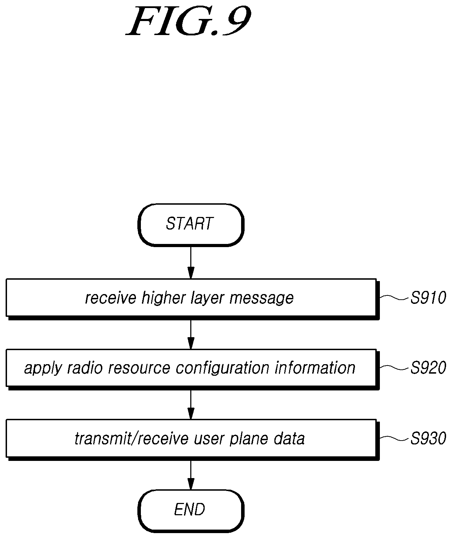

FIG. 9 is a flowchart illustrating operations of a UE according to an embodiment.

Referring to FIG. 9, in a method for processing an application data flow, a UE may receive a higher layer message including radio resource configuration information associated with at least one of assistance information for an application traffic characteristic and PDU set information (S910).

For example, the application data flow may be a PDU set having a high correlation between data flows such as XR or CG. The UE may receive, from the base station, radio resource configuration information associated with assistance information that may help with the characteristics of the corresponding application traffic. Alternatively, the UE may receive radio resource configuration information associated with the PDU set information from the base station. Alternatively, the UE may receive the radio resource configuration information associated with the assistance information and the PDU Set information from the base station.

In accordance with an embodiment, the assistance information may include at least one of uplink or downlink period information about the application data flow and jitter information associated with the period information. As described above, the application data flow may result in uplink or downlink activity at a non-integer period according to the traffic characteristics of the corresponding application. Further, the application data flow may introduce a certain level of jitter in uplink or downlink transmission/reception.

Accordingly, the period information may be set to a non-integer value. However, the period information may also be set to an integer value. By using the assistance information, the UE may perform effective application traffic processing by applying transmission/reception parameters considering the characteristics of the corresponding application data flow.

According to another embodiment, the PDU set information may include at least one of a PDU Set sequence number, PDU Set end PDU indication information, and PDU Set importance information. For example, the PDU set information may include a PDU set sequence number used in the corresponding application. Alternatively, the PDU set information may include indication information indicating the last PDU of the PDU set where the PDU set of the corresponding application is terminated. Alternatively, the PDU set information may include importance information applied to the PDU set. One PDU set may be set to have the same importance.

The UE may flexibly cope with dynamic traffic changes such as XR or CG by applying and processing the dynamic changes of application data traffic considering the PDU set.

According to another embodiment, the PDU set information may be included in the GTP-U header and transferred from the user plane entity to the base station. For example, the user plane entity may mean a user plane function (UPF). Alternatively, the user plane entity may refer to any function or entity that performs a function of processing user plane data within the core network. The PDU Set information may be transferred from the user plane entity to the base station. Alternatively, the PDU Set information may be transferred from the base station to the user plane entity. The PDU Set information may be included in the GTP-U header and transferred from the user plane entity to the base station.

Meanwhile, the higher layer message may be an RRC message. For example, the higher layer message may include an N1 session management (SM) container including a PDU Set QoS parameter. In other words, the UE may identify the N1 SM container included in the higher layer message and apply to the corresponding application data flow processing using the PDU Set QoS parameter included in the N1 SM container.

The UE may perform the step of applying the radio resource configuration information to the UE (S920).

According to an embodiment, the UE may store the received radio resource configuration information in the UE. Alternatively, the UE may store the same in the parameter value of the UE and use the same when needed later.

For example, the radio resource configuration information may include one or more of DRX configuration information supporting a non-integer value based on assistance information and data radio bearer configuration information associated with one or more logical channel configurations based on PDU Set information.

According to another embodiment, the UE may configure the DRX parameter by storing or applying the DRX configuration information supporting the non-integer value included in the wireless resource configuration information to the UE. Accordingly, a UE DRX operation suitable for the application data flow transmitted and received at a period set to the non-integer value may be performed.

According to another embodiment, the UE may configure the DRB of the UE using the DRB configuration information associated with the logical channel configuration included in the radio resource configuration information. The corresponding logical channel configuration is configured based on PDU Set information, and a logical channel and a DRB suitable for the application data flow may be configured in the UE.

The UE may perform the step of transmitting and receiving the user plane data generated in the application layer using the radio resource configuration information (S930).

According to an embodiment, the UE may apply the radio resource configuration information to the UE and transmit and receive user plane data generated in the corresponding application layer. For example, the UE may process the user plane data generated in the corresponding application layer using the data radio bearer configured using the radio resource configuration information. As another example, the UE may control the DRX operation of the UE according to the uplink or downlink period generated as a non-integer value by applying the DRX parameter configured using the radio resource configuration information to the UE.

Through the above operations according to the embodiment, the UE may enhance dynamic processing performance for various transmission/reception data generated in a specific application. Further, the UE may process a service requiring high accuracy and responsiveness, such as XR or CG, efficiently and without any problems.

Hereinafter, more specific procedures and related information will be described in detail for each detailed embodiment.

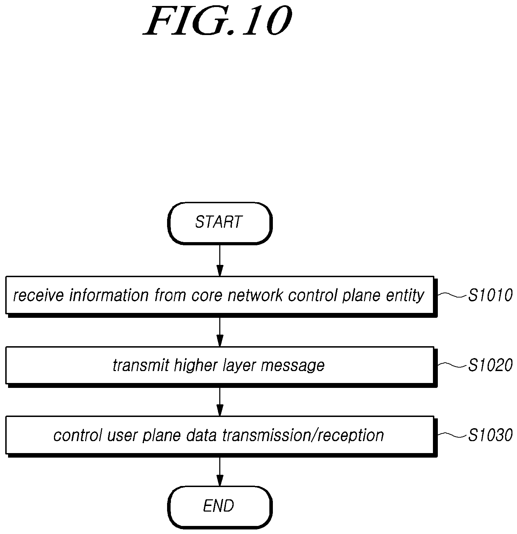

FIG. 10 is a flowchart for describing operations of a base station according to an embodiment.

Referring to FIG. 10, in a method for processing an application data flow, a base station according to the embodiments may perform the step of receiving, from a core network control plane entity, at least one of assistance information about an application traffic characteristic, a PDU Set QoS parameter, identification information for associating a flow belonging to a multi-modal service, and synchronization threshold information (S1010).

According to an embodiment, the core network control plane entity may be a session management function (SMF). The SMF may allocate an IP address to the UE to provide a connection between the UE and an external data network. At this time, the SMF may receive the IP address from the UPF or the external data network and provide the same to the UE.

Further, the application data flow may be a PDU set having a high correlation between data flows such as XR or CG.

The base station may receive various information from the core network control plane entity.

According to an embodiment, the base station may receive assistance information for the application traffic characteristic. The assistance information may include at least one of uplink or downlink period information about the application data flow and jitter information associated with the period information. As described above, the application data flow may result in uplink or downlink activity at a non-integer period based on the traffic characteristics of the corresponding application. Further, the application data flow may introduce a certain level of jitter in uplink or downlink transmission/reception. Here, the period information may be set to a non-integer value.

According to another embodiment, the base station may receive the PDU Set QoS parameter. The PDU Set QoS parameter may include a parameter value for setting the quality of the PDU Set generated in the application.

According to another embodiment, the base station may receive identification information for associating the flow belonging to the multi-modal service. The multi-modal service refers to a service that exchanges information through various interfaces including visual and auditory senses, and the identification information may refer to an identifier used to associate data flows belonging to the corresponding multi-modal service.

According to another embodiment, the base station may receive synchronization threshold information. For example, in order to avoid a negative influence on the user experience for the application, synchronized processing may be required between different single modal data/flows. In other words, a QoS characteristic/parameter for avoiding a negative influence on the user experience may be defined between different single-modal data/flow/media elements,. For example, a multi-modal data delivery synchronization threshold/limit value/instruction information may be defined.

The base station may receive the above-described information through an interface between the base station and the core network entity.

The base station may perform the step of transmitting, to the UE, a higher layer message including radio resource configuration information associated with at least one of the assistance information for the application traffic characteristic and the PDU Set information (S1020).

According to an embodiment, the base station may transmit radio resource configuration information to the UE through an RRC message which is a higher layer message.

According to an embodiment, the assistance information may include at least one of uplink or downlink period information about the application data flow and jitter information associated with the period information. As described above, the application data flow may result in uplink or downlink activity at a non-integer period according to the traffic characteristics of the corresponding application. Further, the application data flow may introduce a certain level of jitter in uplink or downlink transmission/reception.

Accordingly, the period information may be set to a non-integer value. Of course, the period information may be set to an integer value. Based on the assistance information, the UE may perform effective application traffic processing by applying transmission/reception parameters considering the characteristics of the corresponding application data flow.

According to another embodiment, the PDU set information may include at least one of a PDU Set sequence number, PDU Set end PDU indication information, and PDU Set importance information. For example, the PDU set information may include a PDU set sequence number used in the corresponding application. Alternatively, the PDU set information may include indication information indicating the last PDU of the PDU set where the PDU set of the corresponding application is terminated. Alternatively, the PDU set information may include importance information applied to the PDU set. One PDU set may be set to have the same importance.

The UE may flexibly cope with dynamic traffic changes such as XR or CG by applying and processing the dynamic changes of application data traffic considering the PDU set.

Meanwhile, the PDU set information may be included in the GTP-U header and transferred from the user plane entity to the base station.

According to another embodiment, the PDU set information may be included in the GTP-U header and transferred from the user plane entity to the base station. For example, the user plane entity may mean a user plane function (UPF). Alternatively, the user plane entity may refer to any function or entity that performs a function of processing user plane data within the core network. The PDU Set information may be transferred from the user plane entity to the base station. Alternatively, the PDU Set information may be transferred from the base station to the user plane entity.

Meanwhile, the higher layer message may be an RRC message. For example, the higher layer message may include an N1 session management (SM) container including a PDU Set QoS parameter.

The base station may perform the step of controlling transmission and reception of the user plane data generated in the application layer using the radio resource configuration information (S 1030).

The UE may store the received radio resource configuration information in the UE or as the parameter value in the UE to use when needed later.

According to an embodiment, the radio resource configuration information may include one or more of DRX configuration information supporting a non-integer value based on assistance information and data radio bearer configuration information associated with one or more logical channel configurations based on PDU Set information.

According to another embodiment, the UE may configure the DRX parameter by storing or applying the DRX configuration information supporting the non-integer value included in the wireless resource configuration information to the UE. Accordingly, the UE may perform a UE DRX operation suitable for the application data flow transmitted and received at a period set to the non-integer value.

According to still another embodiment, the UE may configure the DRB of the UE using the DRB configuration information associated with the logical channel configuration included in the radio resource configuration information. The corresponding logical channel configuration is configured based on PDU Set information, and a logical channel and a DRB suitable for the application data flow may be configured in the UE.

The base station may use the radio resource configuration information to transmit and receive user plane data generated in the corresponding application layer. For example, the base station may process the user plane data generated in the corresponding application layer using the data radio bearer configured using the radio resource configuration information. As another example, the base station may control the transmission/reception operation according to the DRX operation of the UE based on the uplink or downlink period generated as a non-integer value using the DRX parameter of the UE configured with the radio resource configuration information.

Through the above operations according to the embodiment, the base station may enhance dynamic processing performance for various transmission/reception data generated in a specific application. Further, the UE may process a service requiring high accuracy and responsiveness, such as XR or CG, without any problems.

Meanwhile, the base station may further transmit information for indicating PDU Set support to the core network control plane entity after receiving the information from the core network control plane entity.

Further, the core network control plane entity may indicate protocol information or payload data type information for the application data flow to the user plane entity.

Further, the user plane entity may perform PDU set marking on the user plane data using protocol information or payload data type information.

Accordingly, it is possible to recognize the PDU Set even in the network including the core network to perform efficient application data flow control.

Hereinafter, more specific procedures and related information will be described in detail for each detailed embodiment.

### PDU session setup/modification procedure supporting/providing PDU set integrated packet processing

In order to provide a PDU set associated with one or more QoS flows included in the corresponding application to the PDU Set integrated packet processing for (XR) application, it is necessary to define an operation for controlling the setup/modification of the associated/related PDU session when the PDU session is set up/modified.

For example, UE authentication may be defined to use PDU Set integrated packet processing of an (XR) application, to use a specific XR application service, or to receive PDU session data supporting specific XR application session/PDU-Set integrated packet processing.

Based on subscription data and/or policies from AF/PCF and/or UE capability and/or PDU Set support/availability of the corresponding application session for the corresponding UE, the core network (e.g., 5GC) may authorize/authenticate the UE for the corresponding application session.

The corresponding UE subscription data included in the UDM may include one or more of the following information.
- Whether PDU Set integrated packet processing is available/authorized for a specific application of the UE
- Information for UE to identify PDU session/application session allowed to set up/modify/join a session that supports/provides PDU set integrated packet processing
- Information for UE to identify PDU Set allowed to set up/modify/join a session that supports/provides PDU Set integrated packet processing
- Information for UE to identify a group of PDU Sets allowed to set up/modify/join a session that supports/provides PDU Set integrated packet processing
- Whether the UE may use/authorize application synchronization
- Application synchronization target UE identifier

During or after the PDU session setup/modification procedure including the corresponding application session (or PDU Set(s)), the corresponding subscription data may be provided from the UDM to the SMF/PCF/AF (or to the dedicated SMF supporting PDU Set integrated packet processing). Alternatively, during or after the PDU session setup/modification procedure associated with the corresponding application session (or PDU Set(s)), the corresponding subscription data may be provided from the UDM to the SMF/PCF/AF (or to the dedicated SMF supporting PDU Set integrated packet processing).

During the PDU session setup/modification procedure including the corresponding application session (or PDU Set(s)), the SMF may extract/receive the corresponding PDU Set information or the corresponding QoS parameter or PCC rule in the PDU session information including the corresponding application session (QoS-flows) from NEF/AF/PCF (or dedicated SMF supporting PDU Set integrated packet processing). A corresponding PDU session setup request (or a corresponding application session/PDU-Set-integrated-packet-processing-request) may be applied to the corresponding UE. The corresponding PDU Set information or the corresponding QoS parameter or PCC rule may include one or more of the information included in the disclosure.

The SMF determines to generate/modify the corresponding application session (QoS-flows)/PDU-Set based on the policy rule received from the NEF/AF/PCF. The SMF transmits the corresponding QoS information to the base station/UPF/dedicated-UPF. The SMF transmits corresponding packet detection/forwarding/traffic-handling information (e.g. PDR, Packet Detection Rules, FAR, Forwarding Action Rules), QER, QoS Enforcement Rules, URR, and Usage Reporting Rules) to the UPF/dedicated-UPF/UE. An application session (QoS-flow)/PDU-Set that supports/provides PDU Set integrated packet processing may be associated through packet filter information. According to an embodiment, the application session (QoS flow)/PDU-Set may be associated/marked/tagged based on one or more pieces of information among Source/destination IP address or IPv6 prefix. Source / destination port number, Protocol ID of the protocol above IP/Next header type, Type of Service (TOS) (IPv4) / Traffic class (IPv6) and Mask, Flow Label (IPv6), Priority/Importance indication, traffic/media type, Application Identifier, TMGI and source specific IP multicast address.

According to another embodiment, application session/PDU-Set binding may be provided. The PCF may perform application session/PDU-Set binding based on information for identifying the corresponding application session/PDU-Set (or information for identifying the corresponding PDU Set group). The SMF/dedicated SMF may associate one QoS-flow/PDU-Set to one PCC rule within the corresponding application session. The PCC rule for the corresponding application session/PDU-Set provides a policy for the corresponding QoS-flow/PDU-Set, and the PCC rule may include one or more pieces of information among the (rule) identifier, service data flow detection (Service data flow detection, Precedence, Service data flow template), policy control (5G QoS Identifier (5QI), DL-maximum bitrate, DL-guaranteed bitrate, ARP, Priority Level, Averaging Window, Maximum Data Burst Volume, Packet delay budget, or any QoS parameter/characteristic information provided in the disclosure) and explicitly signaled QoS characteristic information (or any QoS parameter/characteristic information provided in the present invention).

According to another embodiment, the application session/PDU-Set setup/modification request may be triggered by the UE in order to use PDU Set integrated packet processing of the (XR) application, to use a specific XR application service, or to receive PDU session data supporting the specific XR application session/PDU-Set integrated packet processing.

A PDU session associated with the corresponding application session/PDU-Set may be set up/modified. DNN and/or S-NSSAI may be associated to the corresponding application session/PDU-Set. The AMF may select an SMF/dedicated SMF capable of processing the corresponding application session/PDU-Set based on DNN, S-NSSAI, and locally configured data.

To set up/modify the PDU session associated with the corresponding application session/PDU-Set(s) or to set up/modify/activate/deactivate/join the corresponding application session/PDU-Set(s), the UE may transmit the PDU session setup/modification request to the SMF through the AMF. The uplink NAS message including the PDU Set setup/modification request SM container or the PDU Set setup/modification request may further include one or more pieces of information among information for identifying the application session/PDU-Set(s) set up/modified/activated/deactivated/joined/processing desired/requested by the UE, information for a PDU-Set integrated packet processing setup/modification/activation/deactivation/join request, S-NSSAI, UE Requested DNN, PDU Session ID, UE Requested application session/PDU-Set(s), packet filter/QoS parameter/QoS characteristic information for the corresponding application session/PDU-Set(s) and requested packet filter operation (add, modify, delete).

If the PDU session setup/modification associated with the corresponding application session/PDU-Set(s) is accepted, or if the setup/modification/activation/deactivation/joining of the corresponding application session/PDU-Set(s) is accepted, the SMF may respond to the AMF including the PDU session creation/update SM contact response. The corresponding signaling may include one or more pieces of information among the QoS profile for the corresponding application session/PDU-Set(s), N2 SM container (PDU Session ID, QFI(s), QoS Profile(s), S-NSSAI, application session/PDU-Set identification information, mapping information between the corresponding application session (QoS-flow(s)/PDU-Set(s) and (PDU session unicast) QoS flow(s), PDU-Set level QoS parameters and N1 SM container (PDU-Session-Modification-Command/PDU-Session-Establishment-Accept(PDU Session ID, QoS rule(s), QoS rule operation, QoS Flow level QoS parameters for the QoS Flow(s)/PDU-Set(s) associated with the QoS rule(s), PDU-Set level QoS parameters for PDU-Set(s) associated with the QoS rule(s), Session-AMBR, information for identifying the application session/PDU-Set(s) set up/modified/activated/deactivated/joined/processing desired/requested by the UE, information for responding/confirming/authorizing the PDU-Set integrated packet processing setup/modification/activation/deactivation/join request, S-NSSAI, UE Requested DNN, UE Requested application session/PDU-Set(s), packet filter/QoS parameter/QoS characteristic information for the corresponding application session/PDU-Set(s), and requested packet filter operation response/confirmation/authorization).

The N2 message (N2 PDU session request/modification) may be transmitted to the base station.

### Procedure for discerning and processing base stations not supporting application session/PDU-Set processing

If the base station does not support application session/PDU-Set processing (e.g., PDU-Set integrated packet processing, application session (Qos-flows)/PDU-Sets adjusted processing for transferring XR/multi-modal applications to the UE at a similar time, or processing by grouping/associating Qos-flows/PDU-Sets), or if it is desired to disable/deactivate the corresponding function due to a base station load, the UE does not need to send unnecessary signaling while expecting application session/PDU-Set processing when the UE is within the base station coverage. For convenience of description, any function for supporting post-3GPP Rel-18 XR/media services (or any function for differentiated processing of XR applications or any function provided in the disclosure) is denoted as application session/PDU-Set processing. This is for convenience of description and may be replaced with any other term.

According to an embodiment, the base station may broadcast information for indicating whether application session/PDU-Set processing is supported/possible/enabled/activated through system information. Alternatively, the base station may indicate the corresponding information to the UE through an RRC dedicated message (e.g., RRC reconfiguration). The UE receiving the corresponding information may transfer the corresponding information to a higher layer (NAS/Application layer). The higher layer may perform efficient data processing (e.g., NAS signaling, codec adaptation) using the corresponding information.

According to another embodiment, the base station that does not support the corresponding function may transmit and receive the corresponding application data through the QoS parameter (for the general PDU session) mapped/associated to the corresponding application session/PDU-Set(s). If the base station supports application session/PDU-Set processing, the base station may provide the corresponding function (e.g., PDU-Set integrated packet processing) using an identifier for the corresponding application session/PDU-Set(s) and/or a QoS parameter for the corresponding application session/PDU-Set(s). The base station may use the identification information for the application session/PDU-Set(s) to determine the PDU session associated with the indicated application session/PDU-Set(s). If the base station supports application session/PDU-Set processing, QoS parameters (for general PDU sessions) mapped/linked to the application session/PDU-Set(s) may not be used to allocate radio resources. Alternatively, even when the base station supports application session/PDU-Set processing, a QoS parameter (for a general PDU session) mapped/associated to the corresponding application session/PDU-Set(s) may be used to allocate radio resources according to the base station state. If the base station does not support application session/PDU-Set processing, a QoS parameter (for a general PDU session) mapped/associated to the corresponding application session/PDU-Set(s) may be used. Alternatively, if the base station does not support application session/PDU-Set processing, a QoS parameter for a specific QoS flow included in the corresponding PDU session may be used for the corresponding application session/PDU-Set(s). The corresponding information may be transmitted from the SMF/AMF to the base station.

The base station may indicate, to the UE, radio network signaling (e.g., RRC signaling) for (indicating/adding/modifying) radio resource configuration for the corresponding application session/PDU-Set(s). If the base station does not support application session/PDU-Set processing, the corresponding radio resource may indicate to the UE a radio resource configuration based on PDU session resource setup/modification request information (e.g., QFI, QoS flow level Qos parameters) mapped/associated to the corresponding application session/PDU-Set(s).

According to another embodiment, when the base station supports application session/PDU-Set processing, a dedicated QoS-flow/QoS-parameter may be provided for the application session/PDU-Set separated/divided from the PDU Set resource setup/modification request information (e.g., QFI, QoS flow level QoS parameters) mapped/associated to the corresponding application session/PDU-Set(s). If the base station supports application session/PDU-Set processing, the dedicated QoS parameter for the corresponding application session/PDU-Set(s) may be used to allocate a radio resource. If the base station does not support application session/PDU-Set processing, QoS parameters (for general PDU sessions distinguished from the dedicated QoS parameter) mapped/linked to the corresponding application session/PDU-Set(s) may be used.

According to another embodiment, the base station supporting the application session/PDU-Set processing may indicate, to the core network entity/node (e.g., AMF/SMF), information for indicating whether the application session/PDU-Set processing is supported/possible/enabled/activated. The base station may transmit the N2 PDU-session-response/PDU-session-modification-response to the AMF. If the base station does not support application session/PDU-Set processing, the corresponding message (e.g., N2 SM response container) may include an accepted/rejected QoS flow (e.g., QFI(s)) mapped/associated to the corresponding application session/PDU-Set(s). If the base station supports application session/PDU-Set processing, the corresponding message (e.g., N2 SM response container) may include information for indicating whether the base station supports/is capable of/enables/activates the corresponding application session/PDU-Set(s) processing. Further/Alternatively the corresponding message may include accepted/rejected QoS-flow(s)/PDU-Set(s) for the corresponding application session/PDU-Set(s). The core network entity/node (e.g., AMF/SMF/dedicated SMF) may be able to distinguish and process them.

According to another embodiment, the source/target base station supporting the application session/PDU-Set processing may indicate information for indicating whether to support/is capable of/enable/activate the application session/PDU-Set processing to the target/source base station being a peer and/or to the core network entity/node (e.g., AMF/SMF). For example, one or more messages among HANDOVER REQUIRED, HANDOVER REQUEST ACKNOWLEDGE, HANDOVER NOTIFY, PATH SWITCH REQUEST, and PATH SWITCH REQUEST ACKNOWLEDGE transferred from the base station to the core network entity/node may include information for indicating the above-described information.

### Method for providing connection interface with UPF through dedicated UPF

In order to utilize the information/parameter of one unit generated on the application layer in the mobile communication network, additional functions such as application session/PDU-Set processing are required for the existing NR/5GS system function. For example, a (deep) packet inspection may be required to utilize the corresponding information in the UE/UPF. This may be difficult to perform in a typical UPF supporting QoS flow level packet processing. Therefore, it may be preferable to define a dedicated UPF supporting PDU Set packet processing and provide PDU Set integrated packet processing therethrough.

A dedicated UPF may be defined for incoming downlink packet filtering for (XR) application session/PDU Set(s), QoS execution, interaction with the SMF (or dedicated SMF) for corresponding data reception, and delivery of the corresponding data to the radio network node, and be used for PDU Set integrated packet processing.

The dedicated UPF may operate as an anchor for the corresponding application session/PDU-Set. The dedicated UPF may receive only one copy of the corresponding data from the corresponding AF/AS.

The SMF/dedicated SMF may configure a dedicated UPF for corresponding application session/PDU-Set data transmission based on the internal policy or the policy rule received from the PCF.

The dedicated UPF may be connected to the base station with a direct interface. Alternatively, the dedicated UPF may be connected to the conventional general UPF through an interface. In this case, the corresponding application traffic may be transmitted/received from the dedicated UPF to the base station through a general/other UPF.

If the base station supports application session/PDU-Set processing, the dedicated UPF may transfer the corresponding application session/PDU-Set data to the base station through a GTP-U tunnel divided on a per-PDU-Set basis.

If the base station does not support application session/PDU-Set processing, data may be transmitted/received using a QoS parameter (for a general PDU session) mapped/associated to the corresponding application session/PDU-Set(s). The dedicated UPF may transfer the corresponding user plane data to the (general) UPF and the corresponding UPF may transfer the same to the base station through the GTP-U tunnel. Alternatively, the dedicated UPF may transfer the QoS flow mapped to the corresponding application session/PDU-Set(s) to the base station through the GTP-U tunnel.

MBS traffic delivery may be used to provide multi-modal traffic between a plurality of (one or more) UEs at a similar time. MB-UPF may be used as the dedicated UPF. Alternatively, a UPF distinguished from MB-UPF may be used.

### Setup of a dedicated session supporting/providing PDU Set integrated packet processing and joining of an application session supporting/providing PDU Set integrated packet processing

An application session/PDU-Set generation/setup procedure for application synchronization for multi-modal traffic and QoS policy coordination may be provided. The corresponding procedure may be used to start the corresponding application session/PDU-Set integrated packet processing to 5GC by the AF/AS/NEF. Alternatively, the corresponding procedure may be used to start corresponding application session/PDU-Set packet processing by a first UE's join request for the corresponding application session/PDU-Set or by a PDU session setup/modification request associated with the corresponding application session/PDU-Set.

During the corresponding procedure, transmission/reception may be performed of one or more pieces of information among allocation of information for identifying the corresponding application session/PDU-Set (e.g., TMGI, QFI, PDU-Set-ID, PDU-Set-Group-Id, etc.), generation of the corresponding application session/PDU-Set, allocation/reservation of a user plane resource (transport address, GTP-TEID) through signaling between SMF/dedicated-SMF and UPF/dedicated-UPF, information for identifying the application session/PDU-Set, source IP address, PDR, FAR, QoS profile, QoS parameter, application session/PDU-Set (integrated packet processing) state (e.g., inactive/active) and application synchronization target UE list (UE identifier list).

The AF/AS may transmit one or more of an identifier for identifying a corresponding application session/PDU-Set and an application synchronization target UE list (UE identifier list) for the corresponding application session/PDU-Set to the SMF/dedicated SMF/MB-SMF/relevant 5GC-Function/UDM (through the NEF when the NEF exists). The corresponding UE identifier may include UE address (IP address or MAC address) and AF Identifier. The UE identifier may include one or more of the corresponding application Provider Information (information for identifying the corresponding service provider and/or the corresponding application), Application Port ID, IP domain, DNN, and S-NSSAI.

The AF/AS (through an NEF if there is the NEF) may transmit, to the SMF/dedicated SMF/MB-SMF/corresponding 5GC-Function/UDM, one or more of the identifier for identifying the corresponding application session/PDU-Set, traffic characteristic information for the corresponding application session/PDU-Set (e.g., traffic/data type (video, audio, haptic), frame interval, frame rate, information for differentiating whether it is a variable packet size or a fixed packet size, packet size, burst transmission rate, burst length, average jitter, jitter timing, synchronization threshold, importance/correlation) and QoS characteristic information/parameter. When the above-described one or more pieces of information are changed, the transmission of the corresponding information may be triggered.

The AF/AS may request the SMF/dedicated SMF/MB-SMF/corresponding 5GC-Function to allocate an identifier for identifying the corresponding application session/PDU-Set (through an NEF if there is the NEF). The SMF/dedicated SMF/MB-SMF/corresponding 5GC-Function may allocate an identifier for identifying the corresponding application session/PDU-Set and respond (through an NEF if there is the NEF). The corresponding message may additionally include expiration time information.

The AF/AS may perform a service/application session/PDU-Set announcement to the corresponding UE(s). The AF/AS may notify UEs of the identifier for identifying the corresponding application session/PDU-Set. The corresponding message may further include the application session/service type, the PDU-Set type, QoS characteristic information, the QoS parameter, expiration time information, and the like.

The AF/AS may request SMF/dedicated SMF/MB-SMF to generate a corresponding session (through an NEF if there is the NEF). The message may further include the application session/service type, corresponding application session/PDU-Set information, application session/PDU-Set integrated packet processing state information (active/inactive), PDU-Set type (e.g., video, audio, haptic, control information etc.), QoS characteristic information, QoS parameter, expiration time information, and the like. The application session/PDU-Set information may include related QoS parameter/characteristic information.

The SMF/MB-SMF/dedicated SMF may request the creation of a corresponding application session/PDU-Set policy association and provide a parameter related to the corresponding application session/PDU-Set to the PCF. The corresponding input (parameter/message) may include one or more of information for identifying the application session/PDU-Set, DNN, S-NSSAI, PDU-Set type, and QoS parameter/characteristic information. The PCF may respond with a policy for the corresponding application session/PDU-Set. The corresponding policy information may include the QoS parameter/characteristic information for the corresponding application session/QoS-flow/PDU-Set (e.g., one or more of 5G QoS Identifier (5QI), DL-maximum bitrate, DL-guaranteed bitrate, ARP, Priority Level, Averaging Window, Maximum Data Burst Volume, Packet delay budget, synchronization threshold, or any QoS parameter included in the present invention).

The SMF/dedicated SMF/MB-SMF may select UPF/dedicated UPF/MB-UPF. The SMF/dedicated SMF/MB-SMF may request to reserve a user plane incoming resource (from the base station and/or from the AS). The SMF/dedicated SMF/MB-SMF may request to reserve Transport Layer Information (e.g., Endpoint IP Address, GTP-TEID) for data outgoing to the base station. The UPF/dedicated UPF/MB-UPF may select/allocate transport layer information for an incoming address (IP address, port, transport layer information), and data outgoing to the base station and provide the same to the SMF/dedicated SMF/MB-SMF.

After the corresponding MBS session/application session/PDU-Set creation/setup procedure, the PDU session/application session/PDU-Set setup procedure for reserving resources to the base station may be triggered by the session setup/session modification/join request of the UE. Alternatively, the corresponding application session/PDU-Set creation/setup procedure may be triggered by a join request of the first UE for the application session/PDU-Set. Alternatively, the corresponding application session/PDU-Set creation/setup procedure may be used to start the corresponding application session/PDU-Set by the PDU Set setup/modification request associated with the application session/PDU-Set (by the first UE for the corresponding application session/PDU-Set). Alternatively, after the corresponding MBS session/application session/PDU-Set creation/setup procedure, the session setup/session modification/join request of a next (not first) UE(s) for the corresponding MBS session/application session/PDU-Set may be used to associate the corresponding application session/PDU-Set for the corresponding UE without triggering the corresponding application session/PDU-Set creation/setup procedure.

### Addition of QoS characteristics for XR application

5G QoS characteristic information (characteristics) associated to 5QI in conventional 5GS/NR technology is as follows.
Resource type (Non-GBR, GBR, Delay-critical GBR);
Priority Level;
Packet Delay Budget (including Core Network Packet Delay Budget);
Packet Error Rate;
Averaging window (for GBR and Delay-critical GBR resource type only);
Maximum Data Burst Volume (for Delay-critical GBR resource type only).
The 5G QoS characteristic information may be used as a guideline for setting a node-specific parameter for each QoS flow. Standardized or preconfigured additional 5G QoS characteristic information for XR may be defined and indicated through a 5QI value. Alternatively, the 5G QoS characteristic information may be indicated together with additional identification information and/or additional QoS characteristic information. For example, for the application sessions (QoS flows)/PDU-Set divided in one application or for the application sessions (QoS flows)/PDU-Set having correlation/dependency, additional indication information and/or additional QoS characteristic information may be associated to indicate it. For example, the corresponding application sessions (QoS flows)/PDU-Sets may be grouped and, for each application session (QoS flow)/PDU-Set, a relative priority to another application session (QoS flow)/PDU-Set in the corresponding group, correlation/dependency, and synchronization threshold may be indicated. As another example, the signaled 5G QoS characteristic information may be provided as a portion of the QoS profile. XR media delivery is typically provided based on download and adaptive streaming. Therefore, there is a part that may be adjusted through the bit rate. However, for effective QoS support for various XR data streams such as viewpoint-dependent streaming, the corresponding application sessions (QoS flows)/PDU-Sets may be divided, and QoS characteristic information for processing it in association with the corresponding application sessions (QoS flows)/PDU-Sets may be added.

For example, the XR UE uses tracking information. To use pose information/tracking information for an adaptive media processing request, current pose information/tracking information may be transmitted to an XR AF/AS. Pose information/tracking information may be shared/updated to access related information considering the current viewpoint. Tracking/sensor data in the XR device may be processed for XR rendering. Media may be adaptively transmitted/requested based on the viewpoint. Therefore, at least one of whether there is a unit/information requiring adaptive or differentiated request/response/processing/control in one flow, such as pose information/tracking information, whether there is a unit/information requiring dependent processing/control in one flow, pose information/tracking/control information, information for identifying the corresponding information, information for associating the corresponding information, and separate QoS characteristic information for dividing and processing the corresponding application sessions (QoS flows)/PDU-Sets may be added/defined and indicated through control plane signaling and/or user plane marking/tagging.

For reference, the pose information may indicate a position and an orientation in a space relative to the XR space.
- The position in the XR space is a 3D-vector representing the position within a space and relative to the origin defined by the (x,y,z) coordinates.
- The orientation in the XR space is a quaternion representing the orientation within a space and defined by a four-dimensional or homogeneous vector with (x,y,z,w) coordinates, with w being the real part of the quaternion and x, y and z the imaginary parts.

The tracking information may include one or more of pose information, a position (of a specific node), orientation, rotation, a corresponding node identifier to be tracked, an available tracking state providing state, a center for tracking a current position and orientation of an XR UE (e.g., a head mount device), a direction, and a direction change.

Here, the control plane signaling refers to control plane signaling transmitted from the AF/PCF/UDM to the UPF/base station through the SMF/AMF, from the base station to the UE, or from the SMF/AMF to the UE. This may be one or more of NAS signaling (N1 signaling, N2 signaling, or control plane signaling between core network node/entity) and AS signaling (RRC, MAC CE, DCI). Meanwhile, the user plane signaling may include one or more of the GTP-U header included on the tunnel transmitted from the AF/AS to the UPF or from the UPF to the base station, unit information included on the application header or the application payload, SDAP header included on the radio interface between the base station and the UE, PDCP header, RLC header, and MAC header.

As another example, QoS characteristic information considering periodically variable characteristics of the video stream may be added. For example, XR traffic may occur within a predetermined range (+/-) jitter with a specific period.

For example, a jitter level/range occurring at a constant (reaching) period may be considered. And/or XR traffic may occur with a specific period and a magnitude in a specific range. For example, a maximum/minimum burst size/range of data generated at a predetermined (reaching) period may be considered. As another example, QoS characteristic information considering a non-integer period (e.g., 30 fps: 33.33 ms, 60 fps: 16.67 ms, 90 fps: 11.11 ms, 120 fps: 8.33 ms) characteristic of XR (video) traffic may be added. Information indicating this may be provided through control plane signaling and/or user plane marking/tagging.

As another example, one or more pieces of information, such as an update rate, an update request/response, a packet size, a frame rate per second, and a roundtrip interaction delay tolerance of a video stream for supporting an XR application may be added as QoS characteristic information. Information indicating this may be provided through control plane signaling and/or user plane marking/tagging. As another example, QoS-flow/PDU-Set specific QoS characteristic information may be added. For example, information for processing may be added considering whether QoS-flow/PDU-Set unit separate processing or grouping processing is required. Alternatively, information for processing in association with sub-flows/streams divided in PDU-Set units in one QoS flow may be added. Alternatively, information for processing in association with sub-flows/streams divided in PDU-Set units having dependency (in one QoS flow) may be added. Alternatively, information for associating and processing QoS-flows/PDU-Sets divided in QoS-flow/PDU-Set units within one PDU session may be added. Alternatively, information for dividing application traffic in QoS-flow/PDU-Set units and processing, in association, in the application/application layer/application server/PCF may be added. As another example, the corresponding QoS characteristic information may be defined and applied as a QoS-flow/PDU-Set level QoS profile (or a QoS parameter included in the QoS profile).

The corresponding QoS characteristic information may be indicated in connection with 5QI. Alternatively, the corresponding QoS characteristic information may be indicated by defining additional/associated QoS-flow/PDU-Set level sub-indicator/identification information for 5QI.

The core network control plane entity (e.g., SMF/AMF) may include the corresponding 5QI/QoS characteristic information or the corresponding sub-indicator/identification information (through the PDU SESSION RESOURCE SETUP REQUEST message or the PDU SESSION RESOURCE MODIFY REQUEST message, or through the PDU Session Resource Setup Request Transfer IE or the PDU Session Resource Modify Request Transfer IE of the corresponding message) to the base station during the PDU session establishment/modification procedure.

In order to support scheduling considering the corresponding information, the base station may configure an SRB/DRB or SRB(s)/DRB(s) group associated with the corresponding QoS-flow/PDU-Set, QoS-flow/PDU-Set level 5QI/QoS characteristic information or QoS-flow/PDU-Set level sub-indicator/identification information (configured with the corresponding information). The base station may include and configure information indicating the SRB/DRB configuration information in the SRB/DRB configuration information through RRC signaling (e.g., RRC reconfiguration message). Alternatively, the base station may include, in association, a configuration required to transmit the corresponding user plane data considering the corresponding information in the corresponding DRB configuration information through RRC signaling (e.g., RRC reconfiguration message). For example, the base station may configure one or more configurations among configured grants, semi-persistent scheduling, and DRX configurations that consider/support non-integerity of XR traffic in association with the corresponding DRB(s). Alternatively, the base station may configure one or more of LCP restrictions, packet duplication, and a CQI table for a specific target block error rate (e.g., 10 to the negative 5th power) for preferential processing of the logical channel associated with the corresponding DRB. For example, the base station may configure a corresponding logical channel by mapping to a configured grant configuration through RRC. Alternatively, the corresponding logical channel may be allowed to use a dynamic grant indicating a specific physical priority level. Alternatively, the base station may allow the DRB(s) associated with the corresponding QoS-flow(s)/PDU-Set(s) to include information for indicating association between the corresponding DRB(s) in order to associate and process the dependent QoS-flows/PDU-Sets. Alternatively, the base station may include information for indicating the association between the logical channel(s) for the logical channel configuration associated with the DRB(s) associated with the corresponding QoS-flows/PDU-Sets in order to associate and process the QoS-flows/PDU-Sets.

For example, one DRB associated with one or more PDU-Sets may be associated with one or more logical channel configurations. For example, the DRB associated with two PDU-Sets may be associated with two logical channel configurations (e.g., the logical channel configuration for PDU Set importance 1 and the logical channel configuration for PDU Set importance 2) according to PDU Set information (e.g., PDU Set importance for identifying the importance of one PDU Set in one QoS flow).

### Addition of PDU Set-based packet filter

In order to support effective delivery/transmission of the corresponding XR data in a mobile communication network, the application/application layer may add and provide any metadata/control field for each packet. For example, the corresponding application stream/data/flow may be divided into sub-streams/data units/sub-flows/frames having different characteristics through a field/information/indicator for distinguishing specific data traffic/flows/streams/units of the application on the application header or the application payload. For convenience of description, this is denoted as the PDU Set described above.

Packet inspection/filtering may be required to utilize the corresponding information/parameter generated on the application layer in the mobile communication network. It may be preferable that it is performed at end-to-end nodes (e.g., UE and UPF) of the mobile communication network. The corresponding information may include any information generated on any operation (e.g., signaling, transmission, codec, format) required to process the XR application/media.

In downlink, incoming data packets may be classified based on a packet filter set of a downlink packet detection rule (PDR). The UPF/dedicated UPF may carry the user plane traffic classification belonging to one QoS flow through the N3 user plane marking using the QFI. The UPF/dedicated UPF may divide one or more QoS flow(s) belonging to one PDU session into different QoS-flows/PDU-Sets. The classification of the user plane traffic belonging to one PDU-Set may be further refined using any information included in the disclosure and/or a packet filter set to be described below. The classification of the user plane traffic may be carried through the corresponding N3 user plan marking.

QoS-flows/PDU-Sets with correlation/dependence may be grouped into one group-QoS-flow/group-PDU-Set. In the UPF/dedicated UPF, the user plane traffic classifications belonging to one group-QoS-flow/group-PDU-Set may be further refined using the packet filter set described below and/or any information included in the disclosure and carried through corresponding N3 User Plane marking.

For the corresponding PDU session/application session in the uplink, the UE may evaluate the uplink packet against the uplink packet filter in the packet filter set in the QoS rule in ascending order based on the priority of the QoS rule until the matching QoS rule is found. The UE may bind the uplink packet to the QoS flow using a QFI that matches the corresponding QoS rule. The UE may further classify the different user plane traffic (PDU Set) classifications belonging to one or more QoS flow(s)/PDU-Set(s) using the packet filter set described below and/or any information included in the present invention and bind the corresponding uplink packet to the corresponding QoS-flow/PDU-Set. The UE may further classify the different user plane traffic (PDU Set) classifications belonging to one or more QoS flow(s) (or one application session) using the packet filter set described below and/or any information included in the present invention and bind the corresponding uplink packet to the corresponding group-QoS-flow/group-PDU-Set.

The core network entity (e.g., UPF/dedicated UPF) interworking with the data network DN may include a corresponding server or XR application server or XR application in the UE, and such a core network entity may separate the QoS flows for the corresponding application into different application session (QoS-flows)/PDU-Sets using the corresponding information. The core network entity (e.g., UPF/dedicated UPF) interworking with the data network DN, including a corresponding server or XR application server or XR application in the UE, may separate the QoS flows for the corresponding application into different group-QoS-flow/group-PDU-Sets for the corresponding application using the corresponding information.

For example, the core network entity (e.g., UPF/dedicated UPF) interworking with the data network DN, including a corresponding server or XR application server or XR application in the UE, may divide the corresponding application sessions (QoS-flows)/PDU-Sets and add/mark QFI to be mapped to different QoS flows. The QFI added/marked to the corresponding application session (QoS-flow)/PDU-Set may be an additional QFI distinguished from the QFI used for identifying the QoS flow for setting up/modifying the PDU session to which the corresponding application session (QoS-flow)/PDU-Set belongs. For convenience of description, the application session/PDU-Set QoS identification information or application session/PDU-Set identification information divided for each PDU-Set in the corresponding QoS flow (or associated with the corresponding QoS flow), distinguished from the QFI/5QI used as identification information for one QoS flow belonging to one PDU session/QoS identification information is denoted as application session/PDU-Set QFI/5QI. This is for convenience of description and may be replaced with any other term, such as PDU-Set level QFI/5QI, Secondary QFI/5QI, and PDU-Set-Identifier/PDU-Set-5QI.

As another example, for one application, the application sessions/QoS-flow(s) belonging to that application may be distinguished and separated into different PDU-Sets. To identify/distinguish the PDU Set, detailed/additional identification information associated with the QFI/5QI for the QoS flows of the corresponding application belonging to the PDU session may be defined and marked. For example, the detailed/additional identification information may be the above-described application Session/PDU-Set QFI/5QI. As another example, the detailed/additional identification information may be used to associate/group and process PDU-Sets that have dependency on (or belonging to) the corresponding application. For example, one or more of the group identifier for identifying the PDU Set group with dependency, where the PDU Set belongs, the priority/importance of the corresponding PDU Set among the grouped PDU Sets, the relative priority for another application session (QoS flow)/PDU-Set in the corresponding group, and information for identifying another PDU-Set(s) having the correlation/dependency and another PDU-Set(s) having the correlation/dependency may be defined and marked.

As another example, for one or more single-modal data/flows that are correlated to one application, each single-modal data/flow/media element may be associated with the PDU Set, and the corresponding PDU Sets may be grouped. The PDU Set group may include a PDU Set list for PDU Sets belonging to the group. Each PDU Set may be classified by being associated with one or more of the PDU Set identifier, the QFI/5QI for the QoS flow where the corresponding PDU Set belongs, and the application session/PDU-Set QFI/5QI for the corresponding PDU Set. The PDU Set group may be distinguished through an identifier/index for identifying the PDU Set group.

As another example, an identifier that may be used instead of/replacing QFI/5QI may be defined and marked for the PDU-Set. And/or the corresponding identifier may be dynamically assigned (defined by the operator). For example, similar to the dynamically allocated 5QI (dynamic 5QI) scheme, the corresponding identifier may be signaled in the same manner as other QoS profiles/QoS parameters by applying the dynamically allocated QFI/5QI (defined by the operator). For example, the corresponding QoS characteristic information (e.g., dynamic 5QI descriptor IE) may be signaled from the core network control plane entity to the base station as a portion of the corresponding QoS profile with a non-standardized or non-preconfigured 5QI value. For example, the corresponding QFI/5QI/QoS profile/QoS parameter may be included in the subscription data and provided from the UDM to the SMF/PCF/AF. As another example, the SMF may extract (retrieve)/receive the corresponding QFI/5QI/QoS profile/QoS parameter from NEF/AF/PCF (or a dedicated SMF supporting PDU Set integrated packet processing). The SMF determines to generate/modify the corresponding application session (QoS-flows)/PDU-Set based on the policy rule received from the NEF/AF/PCF. As another example, one or more of the above-described operations may be triggered by a UE request.

As another example, if any additional information included in the disclosure is included for a QoS-flow/PDU-Set, the corresponding UE/base station/network node/entity/AF may preferentially apply the corresponding information. The QoS-Flow where the QoS-flow/PDU-Set belongs/associated therewith may be disregarded or, if the corresponding function is not supported, it may be used as default/fallback. In that case, the information indicating the same may be indicated to another node (UE/base station/network node/entity/AF).

As another example, within one application/QoS-flow, the corresponding application/QoS-flow(s) may be distinguished and separated into different PDU-Sets. The identifier/index of the corresponding PDU-Set may be assigned in ascending/descending order of correlation/dependence/priority/importance between different PDU-Sets belonging to the corresponding application/QoS-flow/associated correlation/dependence.

As another example, the corresponding application/QoS-flow may be distinguished within one application/QoS-flow and separated into different PDU-Sets. Different PDU-Sets belonging to the corresponding application/QoS-flow/associated correlation/dependence may be grouped. The identifier/index of the corresponding PDU-Set may be assigned in ascending/descending order of correlation/dependence/priority/importance between the PDU Sets belonging to the corresponding group PDU Set for the grouped PDU-Sets.

As another example, there may be QoS flows that require associated QoS processing in the corresponding application. Information for grouping QoS-flows/PDU-Sets requiring associated QoS flow processing may be defined. Information for identifying a group of QoS flows requiring associated QoS flow processing in the UE or the UPF may be additionally marked. As another example, a representative/default/fallback QFI/5QI (or QFI/5QI for the PDU Session QoS flow mapped to the corresponding application session/PDU-Set) for one QoS-flow of the corresponding application, and application session/PDU-Set QFI/5QI for the PDU-Set associated with the corresponding QoS-flow may be provided in association/simultaneously.

As described above, PDU-Sets may be distinguished through any field/information included by the corresponding application header and information capable of distinguishing units in the application (payload). The corresponding information may be received from the PCF to the core network entity (e.g., AMF/SMF/UPF) or may be received from the XR application server/application function to the core network entity (e.g., AMF/SMF/UPF). And/or the corresponding information may be set by a local configuration.

The XR application in the UE or the XR application server may separate the corresponding application stream (service data flow) into different PDU-Sets using the corresponding information. The application sub-stream/data unit/sub-flow/frame separated using one or more of the packet filters below may be distinguished.

(For IP PDU session type), the packet filter set should support a packet filter based on at least any combination below.
- PDU-Set-type/PDU-Set-data-type
- PDU Set ID (identifier)
- PDU Set sequence number
- Information indicating the total number of packets in the PDU Set, or the last packet in the PDU Set
- Timing information
- Fame-type: P-frame, I-frame, B-frame
- Traffic-type(payload data type): voice, video, haptic, pose information, tracking information
- Media Units (MUs)-type: haptic information, updated pose information, tracking information video, voice,
- Priority/Importance indication
- Source/destination IP address or IPv6 prefix.
- Source / destination port number.
- Protocol information (Protocol ID of the protocol above IP/TCP/UDP/Next header type, e.g., RTP, RTCP).
- Type of Service (TOS) (IPv4) / Traffic class (IPv6) and Mask.
   Flow Label (IPv6).
   Security parameter index.
   Packet Filter direction.
   Application Identifier: Index for identifying application detection rule set configured in UPF
- Application Identifier: Information for identifying the corresponding (XR) application
- Information for identifying the corresponding packet filter set

### Control information: Pose information/tracking information

For example, the UE or UPF may filter packets for each of QoS-flow/PDU Set type in any application. Signaling indicating this may be provided. For example, the core network control plane entity (e.g., SMF/AMF) may configure corresponding packet filtering for the corresponding XR application (or QoS flow(s) of the corresponding application) during the PDU session establishment/modification procedure. Alternatively, the core network control plane entity (e.g., SMF/AMF) may activate/deactivate the corresponding packet filtering for the corresponding XR application session/PDU-Set (or for the QoS flow(s) of the corresponding application) during the PDU session establishment/modification procedure. Alternatively, when the PCC rule is activated/deactivated by the PCF, the core network control plane entity (e.g., SMF/AMF) may include one or more pieces of information included in the above-described packet filter set and information for indicating activation/deactivation and transmit the same to the UPF/UE to activate/deactivate/execute the rule based on the corresponding packet filter in the UPF/UE. For example, packet filtering on a per-QoS-flow/PDU-Set basis may be activated/deactivated for effective control.

The core network control plane entity may transmit information indicating filtering request/activation/deactivation to the UPF through the corresponding packet filter set. The core network control plane entity may also transmit information indicating the filtering request/activation/deactivation through the corresponding packet filter configured to the UE. The information indicating the packet filtering request/activation/deactivation may include the above-described information for the corresponding packet filtering. The corresponding information may be received from the PCF or from the XR application server/application function. And/or the corresponding information may be set by a local configuration.

As another example, the core network control plane entity (e.g., SMF/AMF) may bind the policy and charging control (PCC) rule to the corresponding QoS-flow/PDU-Set. The SMF may allocate the information for identifying one or more pieces of information included in the QFI/5QI/dynamic-5QI-descriptor/corresponding PDU Set/the above-described QoS characteristic information to one PDU Set and derive a QoS profile. The corresponding UPF instructions and QoS rule may be bound to the corresponding QoS-flow/PDU-Set provided by the PCF from the PCC rule. For each PCC rule bound to the corresponding PDU Set, the SMF may include one or more pieces of information from any of the following: (e.g., QoS characteristic information, packet marking information, packet filter set information, or 5QI/QFI/sub-indicator, PDU Set group identifier, PDU Set list, etc.) included in the disclosure to enable classification/ bandwidth execution, and marking for the user plane traffic and provide the same to the UPF.

The UPF may include additional information (e.g., any information (e.g., QoS characteristic information, packet marking information, packet filter set information, 5QI/QFI/sub-indicator, QoS-flow/PDU-Set group identifier, QoS-flow/PDU-Set list, UE identifier list, etc.) included in the disclosure) in the GTP-U header containing 5QI/QFI and encapsulate the same. Alternatively, the UPF may include additional information in the GTP-U header associated with 5QI/QFI and encapsulate the same. Additional information may also be included in the DL PDU session information contained in the PDU session user plane protocol. Alternatively, the UPF may include additional information when the corresponding indication information is received/configured/applied/set (from another core network entity).

As another example, the base station may include additional information in the GTP-U header containing 5QI/QFI and encapsulate the same. Alternatively, the UPF may include additional information in the GTP-U header associated with 5QI/QFI and encapsulate the same. Additional information may also be included in the UL PDU session information contained in the PDU session user plane protocol. Alternatively, the base station may include additional information when the corresponding indication information is received/configured/applied/set (from another core network entity).

As another example, the UE classifies and marks uplink user plane traffic. The QoS rule for this may be explicitly provided to the UE. For example, the corresponding QoS rule may be signaled from the core network entity AMF/SMF to the UE through a message using the PDU session establishment/modification procedure. Alternatively, the corresponding QoS rule may be preconfigured in the UE.

The UE may additionally classify user plane traffic (e.g., QoS-flow/PDU-Set) with different characteristics and belonging to one QoS flow using a packet filter set to be described below, and bind the uplink packet to the corresponding PDU Set using the identifier and/or corresponding additional indication information included in the disclosure.

The base station may indicate configuration information for associating/mapping the corresponding QoS-flow/PDU-Set to the DRB to the UE through RRC signaling (e.g., RRC reconfiguration message). For example, the SDAP configuration may include one or more pieces of information included in the QFI, 5QI, and dynamic-5QI-descriptor for the mapped QoS-flow/PDU-Set, information for identifying the corresponding QoS-flow/PDU-Set, and one or more pieces of QoS characteristic information described above. As another example, the corresponding SDAP may be defined and used with a header of a format different from that of the SDAP header for the DL Data PDU containing the RDI, RQI, and QFI fields.

For example, the corresponding header may be configured by including/adding one or more pieces of information/fields from one or more pieces of information included in the QFI, 5QI, dynamic-5QI-descriptor, information for identifying the corresponding QoS-flow/PDU-Set, the above-described QoS characteristic information, and header version information for the PDU Set without RDI and RQI fields. As another example, the corresponding header may be configured by including/adding one or more pieces of information/fields among one or more pieces of information included in the QFI, 5QI, and dynamic-5QI-descriptor, information for identifying the corresponding QoS-flow/PDU-Set, the above-described QoS characteristic information, and header version information for the QoS-flow/PDU-Set.

As another example, the corresponding SDAP may be defined and used with a header of a format different from the SDAP header for the UL Data PDU containing D/C, R, and QFI fields. As an example, the corresponding header may be configured by including/adding one or more pieces of information/fields among one or more pieces of information included in the QFI, 5QI, and dynamic-5QI-descriptor, information for identifying the corresponding QoS-flow/PDU-Set, the above-described QoS characteristic information, the above-described packet filter information and header version information for the PDU Set.

Information included in the above-described signaling/UE operation/core network entity (AMF/SMF/PCF/UPF/NEF/AF) operation/base station operation may include one or more pieces of information among information for dividing units in the application (payload), header information in the application, QoS-flow/PDU-Set type (divided through information for dividing units in the application) or identifier/index information for identifying the same, information for identifying the group for QoS-flows/PDU-Sets requiring associated QoS flow processing, sub-indicator/identifier/index information for identifying the PDU Set associated with the QFI, sequence number in PDU Set, end mark (e.g., Indicates if this is the last packet in the PDU Set) for the PDU Set, data/traffic/service type (The data type of the PDU Set, PDU Set type), importance/priority (assigned relative Priority/importance information in the same flow), corresponding unit/packet generation/transmission timing information, corresponding unit/packet reception timing information, downlink/uplink jitter (e.g., the sum of the jitter incurred in NG-RAN (including the jitter at gNB-CU-UP, on F1-U and on gNB-DU) and the jitter over Uu interface for the corresponding PDU Set, or difference between the time of arrival/reception/transmission of the actual unit and the time of a specific/indicated/preconfigured period for the corresponding PDU Set, corresponding downlink/uplink jitter indication information (e.g., one-bit information for indicating the presence of the corresponding information), downlink/uplink delay (e.g., the sum of the delay incurred in NG-RAN (including the delay at gNB-CU-UP, on F1-U and on gNB-DU) and the delay over Uu interface for the corresponding PDU Set), corresponding downlink/uplink delay indication information (e.g., one-bit information for indicating the presence of the corresponding information), and any information and timing information for dividing units through the fields/information included in the application header.

As another example, to transfer/process the multi-modal data included in the application at a similar time, the application session/PDU-Set or the packets/PDUs (e.g., the first packet/PDU, last packet/PDU, or all packets/PDUs included in the corresponding PDU Set, or the first packet/PDU, last packet/PDU, or all packets/PDUs included in the application session/PDU-Set determined/selected/specified by the rule/indicated from the core network node/entity) included in the application session/PDU-Set may include one or more pieces of information among the above-described information in the payload of the corresponding PDU.

As another example, to transfer/process the multi-modal data included in the application at a similar time, the application session/PDU-Set or the packets/PDUs included in the application session/PDU-Set may include one or more pieces of information from the above-described information in the payload of a unit of information generated by the application.

As another example, to transfer/process the multi-modal data included in the application at a similar time, the application session/PDU-Set or the packets/PDUs included in the application session/PDU-Set may include one or more pieces of information from the above-described information in the header/field for the unit information generated by the application.

As another example, to transfer/process the multi-modal data included in the application at a similar time, the application session/PDU-Set or the packets/PDUs included in the application session/PDU-Set may associate/mark/tag/include one or more pieces of information from the above-described information in the IP packet header, TCP header, UDP header, or application header. It may be included in the header/field.

As another example, to transfer/process the multi-modal data included in the application at a similar time, the application session/PDU-Set or the packets/PDUs included in the application session/PDU-Set may associate/mark/tag/include one or more pieces of information from the above-described information in the GTP-U header carrying the corresponding packet/PDU.

If signaling (e.g., signaling including any information provided in the present invention) for providing a corresponding function to a legacy node/entity supporting only the conventional 5G/NR technology (e.g., a node/entity not supporting any function for supporting a post-3GPP Rel-18 XR/media service (or any function (e.g., PDU Set-integrated packet processing) provided in the disclosure)) is received, the corresponding node/entity may process packets based on the QoS-flow/QoS-parameter of the PDU Set associated with the corresponding application-session/PDU-Set.

Dedicated QoS-flows/QoS-parameters may be used for the corresponding application-session/PDU-Set in the corresponding PDU session. As such, the QoS-flow/QoS-parameter associated with the dedicated QoS-flow/QoS-parameter for the corresponding application-session/PDU-Set in the corresponding PDU Session may be separated and provided.

If the base station does not support application session/PDU-Set processing, QoS parameters (for general PDU sessions) mapped/linked to the corresponding application session/PDU-Set(s) may be used. Alternatively, if the base station does not support application session/PDU-Set processing, QoS parameters for a specific QoS flow included in the PDU session may be used for the application session/PDU-Set(s).

If the base station supports application session/PDU-Set processing, PDU-Set integrated packet processing may be provided using the identifier for the corresponding application session/PDU-Set(s). The base station may use the identification information for the application session/PDU-Set(s) to determine the PDU session associated with the indicated application session/PDU-Set(s). If the base station supports application session/PDU-Set processing, QoS parameters (for general PDU sessions) mapped/linked to the application session/PDU-Set(s) may not be used to allocate radio resources.

The base station may indicate, to the UE, radio network signaling (e.g., RRC signaling) for configuring (indicating/adding/modifying) radio resources for the corresponding application session/PDU-Set(s). If the base station does not support application session/PDU-Set processing, the corresponding radio resource may be reconfigured as general (radio bearer) transmission through the PDU session mapped/linked to the application session/PDU-Set(s).

The base station may transmit an N2 PDU-session-response/PDU-session-modify-response to the AMF. If the base station does not support application session/PDU-Set processing, the corresponding message (e.g., N2 SM response container) may include the accepted/rejected QoS flow (e.g., QFI(s)) (for the general PDU session) mapped/associated with the corresponding application session/PDU-Set(s). If the base station supports application session/PDU-Set processing, the corresponding message (e.g., N2 SM response container) may include information indicating that the base station supports application session/PDU-Set(s) processing. This enables the core network entity/node (e.g., AMF/SMF/dedicated SMF) to differentiate and process them.

Hereinafter, an application synchronization control method for multi-modal data will be described.

Through the NR/5G system, related tactile and/or multi-modal data for a single application on a single UE (e.g., audio, video, or haptic data which can include sensation when touching a surface (e.g., pressure, texture, vibration, temperature), or kinaesthetic senses (e.g., gravity, pull forces, sense of position awareness) related to a specific time) may be transferred to the user/UE at similar times. For example, each single modal data may be associated with a PDU Set, and a plurality of associated PDU Set(s) having dependency/association may be grouped to be transferred to the user/UE at similar times.

Multi-modal data is defined as describing the input data from different types of devices/sensors or output data to different destinations (e.g., one or more UEs) required for the same task or application. Multi-modal data consists of one single modal data or more. And each single modal data is strongly dependent on each other. A single modal data may be viewed as one type of data. More seamless and natural communication may be possible by combining inputs from one or more sources and/or outputs to one or more destinations.

An application providing a tactile and multi-modal service may include a plurality of single modal data/flows (e.g., audio, video, or haptic data related to a specific time) with different QoS requirements. To avoid negative impacts on the user experience for the application, synchronized processing may be provided between different single modal data/flows. The user's service experience may be enhanced through coordinated processing between correlated modalities/flows. Coordinated processing may be provided with the multi-modal data associated with the PDU Set.

For convenience of description, an application including audio, video, and haptic data is described. However, this is for convenience of description, and the present embodiments may be applied to any multi-modal service.

For the application, each single modal data/flow may be divided into different PDU Sets. For example, tactile (haptic data/haptic feedback) may be classified as PDU Set 1, the audio as PDU Set 2, and the video as PDU Set 3. Each PDU Set may be classified with identification information/identifier/index to identify the PDU Set according to the corresponding modality/media element. Alternatively, each PDU Set may be classified with identification information/identifier/index to distinguish the corresponding modality/media element type in the PDU Set. For convenience of description, this is referred to as a PDU Set identifier below, but this may be information to identify the PDU Set or the modality/media element type associated with a specific PDU Set.

QoS characteristics/parameters may be defined to avoid negative impacts on user experience between different single-modal data/flow/media elements. For example, multi-modal data delivery synchronization threshold/limit value/instruction information may be defined.

For example, this is the (maximum) tolerable time/timing/duration between one or more stimuli/modality/media elements (e.g., another sensation/modality/media element delayed as compared with one sensation/modality/media element). For convenience of description, this is referred to as a synchronization threshold. This is for convenience of description and may be replaced with any other term.

As another example, the synchronization threshold is a value that should be considered to synchronize and process other modality/flow/media elements compared to one modality/flow/media element among correlated modality/flow/media elements, and it may be set as one value. For example, it may indicate that in a case where audio and tactile sensation (haptic data/haptic feedback) are correlated, if the synchronization threshold is set to 40ms, the audio (PDU Set 2) is delayed within 40ms compared to the tactile sensation (PDU Set 1), and the tactile sensation (PDU Set 1) is delayed within 40ms compared to the audio (PDU Set 2). It may indicate that regardless of the PDU Set (PDU Set 1, PDU Set2), within 40 ms after the transmission/reception/processing of the first/start packet/PDU included in the corresponding PDU Set group (PDU Set 1, PDU Set2) begins, transmission/reception/processing of all/last packet/PDUs included in the corresponding PDU Set group (PDU Set 1, PDU Set 2) may be supported/provided.

As another example, the synchronization threshold is a value that should be considered to synchronize and process other modality/flow/media elements compared to one modality/flow/media element among correlated modality/flow/media elements, and it may be set as one or more values indicating/designating/considering the first-later relationship. For example, in a case where the audio (PDU Set 2) and the tactile sensation (PDU Set 1) are correlated, the audio delay synchronization threshold for the tactile sensation (PDU Set 1) may be set to 50ms, and the tactile sensation (PDU Set 1) delay synchronization threshold for the audio (PDU Set 2) may be set to 25ms, so that the synchronization threshold may be set to be differentiated according to the leading/following modality. In a case where in the corresponding PDU Set group (PDU Set1, PDU Set 2), PDU Set 1 is used as a synchronization threshold reference, it may indicate that within 50 ms after the transmission/reception/processing of the first/start packet/PDU included in PDU Set 1 begins, transmission/reception/processing of all/last packet/PDUs included in the corresponding PDU Set group (PDU Set 1, PDU Set 2)/PDU-Set-2 may be supported/provided. In a case where in the corresponding PDU Set group (PDU Set1, PDU Set 2), PDU Set 2 is used as a synchronization threshold reference, it may indicate that within 25 ms after the transmission/reception/processing of the first/start packet/PDU included in PDU Set 2 begins, transmission/reception/processing of all/last packet/PDUs included in the corresponding PDU Set group (PDU Set 1, PDU Set 2)/PDU-Set-1 may be supported/provided.

As described above, for one or more single-modal data/flows that are correlated to the corresponding application, each single-modal data/flow/media element may be associated to the PDU Set, and the corresponding PDU Sets may be grouped. Among the grouped PDU Sets, the reference PDU Set used as a reference may be indicated/designated. The synchronization threshold for synchronization processing may be associated to the corresponding PDU Set group. The corresponding timer value may be designated to limit the time when synchronization processing is applied to the corresponding PDU Set group. Alternatively, to limit the time when synchronization processing is applied to the corresponding PDU Set group, the corresponding synchronization processing allowable time/duration/time range/period/multiple of the period may be indicated. Alternatively, the traffic period/multiple of period/time window/sequence number of the PDU Set to which synchronization processing is applied for the corresponding PDU Set group may be indicated or, to limit the time when synchronization processing is applied for the corresponding PDU Set group, the corresponding function may be activated/deactivated and used through signaling. Alternatively, synchronization processing for the corresponding PDU Set group in each UE/base station/UPF/node/entity/AS may be performed based on the traffic generation period of the reference PDU Set.

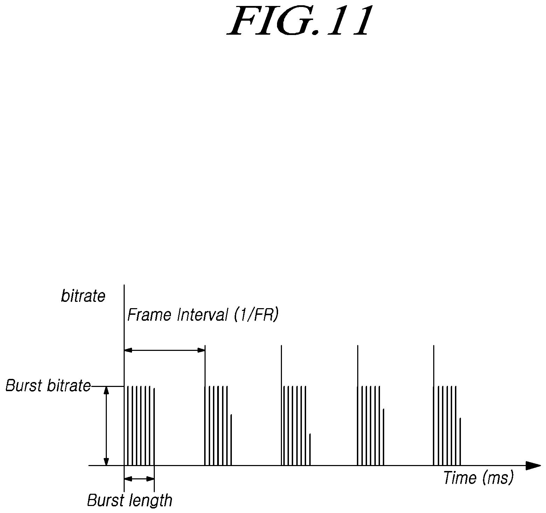

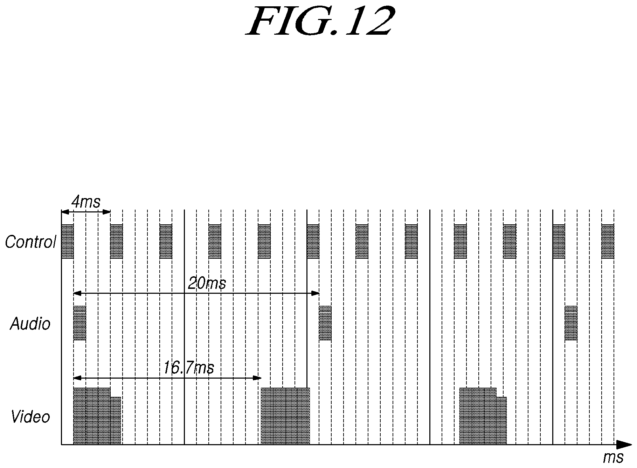

FIG. 11 illustrates an example of downlink traffic for an application. FIG. 12 illustrates an example of generation of downlink traffic for an application.

Referring to FIG. 11, in one application, a video stream has a variable packet size and is generated periodically in bursts at each interval. For example, it may have different periods/frame intervals (33.3/16.7/11.1/8.3 ms) depending on the frame rate (FR, 30/60/90/120 fps). On the other hand, as shown in FIG. 12, in one application, the voice stream is generated with a specific (e.g., 20ms) period, and the tactile/pose/control packet always has a periodic (e.g., 4ms) traffic characteristic with a fixed packet size. In the example of FIG. 12, the period of the video stream/frame is 16.7ms.

However, due to unpredictable jitter, delay, etc., the packet transmission/reception/arrival/processing time at each UE/base station/UPF/node/entity/AS may not be accurately periodic.

Further, specific multi-modal data may be divided into packets having different characteristics in one traffic stream. For example, different packets in the video stream may have different priorities/importances. The I-frame may be independently encoded/decoded as an intra-coded picture. The P-frame representing the predicted picture is not a complete frame and includes only image changes for the previous frame. The B-frame is a bi-directional predicted picture and includes changes between the previous and next frames. It may be encoded and decoded when the previous and next frames are available. Considering this relationship, if the I-frame is lost, the group of pictures (GOP) may be lost even when the B-frame/P-frame is successfully transferred. Therefore, the I-frame may be considered as an important frame compared to other frames.

Considering these traffic characteristics, for one or more single modal data/flows that have dependency/correlation for the application, each single modal data/flow/media element may be associated with the PDU Set, and the corresponding PDU Sets may be grouped and synchronized.

For example, a reference PDU Set used as a reference among the grouped PDU sets may be indicated/designated. For example, tactile sensation (haptic data/haptic feedback) may be divided as PDU Set 1, audio may be divided into PDU Set 2, video may be divided as PDU Set 3, and video (PDU Set 2) may be indicated/designated as the reference PDU Set.

As another example, tactile sensation (haptic data/haptic feedback) may be divided into PDU Set 1, audio may be divided into PDU Set 2, video may be divided into PDU Set 3, video (PDU Set3) may include a PDU sequence number for each frame occurring every frame period, and a corresponding PDU set may be divided using the PDU Set identifier and the PDU Set sequence number. A PDU Set having an arbitrary function value for a specific sequence number may be indicated/designated as a reference PDU Set. If the I frame occurs in the first frame of the video PDU Set and occurs every 5 frames (e.g., 1, 6, 11, 16, 21), the corresponding PDU Set may have a sequence number assigned for each corresponding frame, and a PDU Set having a PDU Set sequence number of 1+n*5 may be indicated/designated as a reference PDU Set.

As another example, tactile (haptic data/haptic feedback) may be divided into PDU Set 1, audio may be divided into PDU Set 2, video may be divided into PDU Set 3, and in the case of video (PDU Set3), priority/importance may be indicated/designated according to the frame type (I-frame, P-frame, B-frame), and the corresponding PDU Set may be further divided. The PDU Set may be distinguished by a combination of the PDU Set identifier and priority/importance. A PDU Set having a specific priority/importance may be indicated/designated as a reference PDU Set.

As another example, tactile sensation (haptic data/haptic feedback) may be divided into PDU Set 1, audio may be divided into PDU Set 2 and, of the video, I-frame may be divided into PDU Set 3, P-frame may be divided into PDU Set 4, B-frame may be divided into PDU Set 5, and I-frame (PDU Set3) may be indicated/designated as a reference PDU Set.

Meanwhile, the synchronization threshold for synchronization processing may be associated with the corresponding PDU Set group. The UE/base station/UPF/node/entity/AS receiving the corresponding indication information (or where the corresponding indication information is (previously) configured) may perform synchronization processing considering transmission/reception/processing of the first/start packet/PDU included in the corresponding reference PDU Set. If the packet/PDU included in the corresponding PDU Set is not transmitted/received/processed during a specific period/duration/time range/time window/sequence number/limited time for the corresponding PDU Set, the packets/PDUs included in the remaining PDU Sets included in the corresponding PDU Set group may be transmitted/received/processed. Alternatively, if a packet/PDU included in the corresponding PDU Set is not transmitted/received/processed during a specific period/duration/time range/time window/sequence number/limited time for the corresponding PDU Set, a secondary reference PDU Set used as a reference among the remaining PDU Sets included in the corresponding PDU Set group may be indicated/designated, and synchronization processing for the corresponding PDU Set group may be performed based thereon.

As another example, the reference PDU Set for synchronization processing may be indicated/designated based on the priority/importance of the PDU Set among the grouped PDU Sets. The synchronization threshold for synchronization processing may be associated to the corresponding PDU Set group. The UE/base station/UPF/node/entity/AS receiving the corresponding indication information (or where the corresponding indication information is (previously) configured) may perform synchronization processing considering transmission/reception/processing of the first/start packet/PDU included in the corresponding reference PDU Set. If the packet/PDU included in the corresponding PDU Set is not transmitted/received/processed during a specific period/duration/time range/time window/sequence number/limited time for the corresponding PDU Set, the packets/PDUs included in the remaining PDU Sets included in the corresponding PDU Set group may be transmitted/received/processed. Alternatively, if a packet/PDU included in the corresponding PDU Set is not transmitted/received/processed during a specific period/duration/time range/time window/sequence number/limited time for the corresponding PDU Set, a secondary reference PDU Set used as a reference among the remaining PDU Sets included in the corresponding PDU Set group may be indicated/designated, and synchronization processing for the corresponding PDU Set group may be performed based thereon. If the packet/PDU included in the corresponding PDU Set is not transmitted/received/processed during a specific period/duration/time range/time window/sequence number/limited time, the PDUs included in the remaining PDU Sets included in the corresponding PDU Set group may be dropped. The corresponding information may be indicated to the UE/base station/UPF/node/entity/AS.

To provide PDU Set integrated packet processing for the PDU Set associated with one or more QoS flows included in the corresponding application for an (XR) application, or to transfer to the user/UE, or adjust and process, at a similar time, multi-modal data related to one application (e.g., audio, video, or haptic data related to a specific time), additional information may be associated/marked/tagged for PDUs included in the multi-modal QoS-flow/PDU-Set that needs to be transferred or adjusted and processed at a similar time.

To provide PDU Set integrated packet processing for the PDU Set associated with one or more QoS flows included in an application (e.g., an XR application), or to transfer/process multi-modal data included in the application at a similar time, the QoS-flow/PDU-Set or the packets/PDUs included in the QoS-flow/PDU-Set (e.g., the first packet/PDU, last packet/PDU, or all packets/PDUs included in the corresponding PDU Set, the first packet/PDU, last packet/PDU, or all packets/PDUs included in the QoS-flow/PDU-Set determined/selected/specified by the rule/indicated from the core network entity/entity) may include one or more among the following information. Signaling for indicating/configuring the corresponding association/marking/tagging/inclusion may be provided. For example, the corresponding signaling may be indicated by the AF/PCF/UDM to the UPF/base station through the SMF/AMF, or from the base station to the UE, or from the SMF/AMF to the UE.

For example, the QoS-flow/PDU-Set identifier, QoS-flow/PDU-Set sequence number packet/PDU sequence number in the QoS-flow/PDU-Set, the total number of packets in the QoS-flow/PDU-Set or information for indicating whether the packet is the last packet in the QoS-flow/PDU-Set, PDU Set type or data/media type (e.g., video, audio, or tactile etc.) of the corresponding PDU Set, relative importance (e.g., importance allocated/indicated/preconfigured) of the corresponding PDU Set, buffer information for differentiating application traffic for different buffers, available time (e.g., an available time to the next operation (transmission/reception/encoding/decoding processing) in a case where the start time is 0 when the UE/base station/UPF/AS initiates any operation (transmission/reception/encoding/decoding processing), packet delay observed in the last processing time, and rendering time associated with the media including the corresponding packet may be associated/marked/tagged.

As another example, for the QoS-flows/PDU-Sets to be transferred/processed (e.g., the QoS-flows/PDU-Sets included in the QoS-flow/PDU-Set group), timing information to be transferred/processed may be associated/marked/tagged to the corresponding QoS-flow/PDU-Set (or reference QoS-flow/PDU-Set) or any packets/PDUs included in the corresponding QoS-flow/PDU-Set (or reference QoS-flow/PDU-Set) (e.g., the first packet/PDU, last packet/PDU, or all PDUs). Here, the timing information may be any information indicating a time/sequence, e.g., a specific reference time (e.g., subframe/frame/slot) for the corresponding PDU Set/offset from the specific reference time (e.g., frame offset, slot offset)/start time/end time/time range/duration/timing sequence/sequence number/sequence range/deadline/remaining time/available time/elapsed time/period/multiple of period/sequence number for period.

As another example, the QoS-flows/PDU-Sets to be transferred/processed at a similar time may be grouped and indicated, and the timing information when the corresponding packets/PDUs are to be transferred/processed may be associated/marked/tagged to the packets/PDUs belonging to the corresponding QoS-flows/PDU-Sets.

As another example, the network transfer available time (e.g., available time to the next processing event (e.g., PDB, network transfer delay, peer UE/AS/base station/UPF reception) in a case where the start time is 0 when the UE/AS/base station/UPF initiates transfer of content), transmission UE/AS delay (e.g., delay required for encoding by the transmission UE/AS and/or for transfer from the transmission AS to the 5GS), or reception UE/AS delay (e.g., information including one or more of delays required for transfer from 5GS to the reception AS and/or decoding/rendering in the reception UE/AS) may be associated/marked/tagged.

As another example, one or more PDU Sets or any packets/PDUs included in the corresponding PDU to be transferred/processed at a similar time may be associated/marked/tagged with the same timing information.

As another example, timing information may be associated/marked/tagged for all packets/PDUs included in the corresponding PDU Set, or for the first packet/PDU included in the corresponding PDU Set, or for the last packet/PDU included in the corresponding PDU Set.

As another example, the corresponding timing information may be a value calculated based on the clock operated in the node/entity (e.g., UE, UPF, AF, AS) that is adding/generating/setting the corresponding information (e.g., 5G internal system clock, external clock, or clock configured/set/synchronized in the corresponding node/entity in conjunction with the internal/external clock). The corresponding value may represent a positive value (e.g., in seconds, milliseconds unit, N*seconds, N*milliseconds unit, seconds/N, milliseconds/N unit, where N is any natural number) for a specific era/time/point in time/period. The corresponding value, N value (or unit, or increment or corresponding code) may be indicated from the control plane node/entity (e.g., AS, AF, PCF, AMF, SMF) providing/controlling the corresponding function to the corresponding node/entity. The corresponding era/time/point in time/period may be one of the start/generation of the corresponding PDU session, start/generation/reception/transmission/available time of the corresponding PDU Set, start/generation/reception/transmission/available time of the first PDU included in the corresponding PDU Set, start/generation/reception/transmission/available time of the last PDU included in the corresponding PDU Set, or start of a specific time period.

The corresponding value may indicate a positive value (e.g., in seconds/milliseconds) increased from a specific initial value. The corresponding specific initial value may be one of 0 or 1, a value received by the peer, a value calculated randomly, or an (offset) value configured/indicated by the control plane node/entity providing the corresponding function to the corresponding node/entity.

During the PDU session setup/modification/join procedure associated with the QoS-flows/PDU-Sets belonging to one application, the SMF may extract (retrieve)/receive the corresponding application session information (or corresponding PDU Set information or corresponding QoS parameter or PCC rule) from the AF/PCF (or dedicated SMF supporting PDU Set integrated packet processing). Further, a corresponding PDU session setup request or a corresponding application session join request may be applied/sent to the corresponding UE.

The SMF determines whether to generate/modify the corresponding application/PDU-Set QoS flow based on the policy rule received from the PCF. The SMF transmits the corresponding QoS information to the base station/UPF/dedicated-UPF. The SMF transmits the corresponding packet detection and forwarding information to the UPF/dedicated-UPF/UE.

The information for identifying the application session supporting/providing PDU Set integrated packet processing or the information for identifying the PDU Set supporting/providing PDU Set integrated packet processing may include one or more pieces of information, such as Source/destination IP address or IPv6 prefix, Source / destination port number, Protocol ID of the protocol above IP/Next header type, Type of Service (TOS) (IPv4) / Traffic class (IPv6) and Mask, Flow Label (IPv6), Priority/Importance indication, traffic/media type, Application Identifier, TMGI and source specific IP multicast address.

According to the embodiments described above, information generated at the application layer may be seamlessly integrated, enabling efficient packet processing. Hereinafter, configurations of a UE and a base station capable of performing the above-described embodiments will be briefly described. Embodiments not described below may also be performed by the UE and the base station based on the above-described operations.

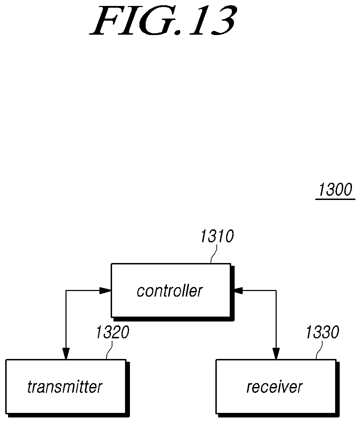

FIG. 13 is a block diagram illustrating a user equipment (UE) according to an embodiment.

Referring to FIG. 13, a UE 1300 processing an application data flow may include a receiver 1330 configured to receive a higher layer message including radio resource configuration information associated with at least one of assistance information for an application traffic characteristic and PDU set information and a controller 1310 configured to apply the radio resource configuration information to the UE and control transmitting/receiving user plane data generated in an application layer using the radio resource configuration information.

For example, the application data flow may be a PDU set with a high correlation between data flows such as XR or CG. The receiver 1330 may receive, from the base station, radio resource configuration information associated with assistance information that may help with the characteristics of the corresponding application traffic. Alternatively, the receiver 1330 may receive radio resource configuration information associated with the PDU set information from the base station. In another case, the receiver 1330 may receive the radio resource configuration information associated with the assistance information and the PDU Set information from the base station.

For example, the assistance information may include at least one of uplink or downlink period information about the application data flow and jitter information associated with that period. As described above, the application data flow may result in uplink or downlink activity at a non-integer period based on the traffic characteristics of the corresponding application. Further, the application data flow may introduce a certain lever of jitter in uplink or downlink transmission/reception.

Accordingly, the period information may be set to a non-integer value. Of course, the period information may be set to an integer value. By using the assistance information, the UE may perform effective application traffic processing by applying transmission/reception parameters considering the characteristics of the corresponding application data flow.

As another example, the PDU set information may include at least one of a PDU Set sequence number, PDU Set end PDU indication information, and PDU Set importance information. For example, the PDU set information may include a PDU set sequence number used in the corresponding application. Alternatively, the PDU set information may include indication information indicating that the last PDU of the PDU set is where the PDU set of the corresponding application is terminated. Alternatively, the PDU set information may include importance information applied to the PDU set. One PDU set may be set to have the same importance.

The controller 1310 may flexibly cope with dynamic traffic changes such as XR or CG by applying and processing dynamic change of application data traffic considering the PDU set.

As another example, the PDU set information may be included in the GTP-U header and transferred from the user plane entity to the base station. For example, the user plane entity may refer to a user plane function (UPF). Alternatively, the user plane entity may refer to any function or entity that performs the function of processing user plane data within the core network. The PDU Set information may be transferred from the user plane entity to the base station. Alternatively, the PDU Set information may be transferred from the base station to the user plane entity.

Meanwhile, the higher layer message may be an RRC message. For example, the higher layer message may include an N1 session management (SM) container including a PDU Set QoS parameter. In other words, the UE may identify the N1 SM container included in the higher layer message and apply to the corresponding application data flow processing using the PDU Set QoS parameter included in the N1 SM container.

The controller 1310 may store the received radio resource configuration information in the UE. Alternatively, the controller 1210 may store the same as the parameter value in the UE and use the same when needed later.

According to an embodiment, the radio resource configuration information may include one or more of DRX configuration information supporting a non-integer value based on assistance information and data radio bearer configuration information associated with one or more logical channel configurations based on PDU Set information.

According to another embodiment, the controller 1310 may configure the DRX parameter by storing or applying the DRX configuration information supporting the non-integer value included in the wireless resource configuration information on the UE. Accordingly, a UE DRX operation suitable for the application data flow transmitted and received at a period set to the non-integer value may be performed.

According to another embodiment, the controller 1310 may configure the DRB of the UE using the DRB configuration information associated with the logical channel configuration included in the radio resource configuration information. The corresponding logical channel configuration is configured based on PDU Set information, and a logical channel and a DRB suitable for the application data flow may be configured in the UE.

For example, the controller 1310 may apply the radio resource configuration information to the UE and control to transmit/receive the user plane data generated in the corresponding application layer. For example, the controller 1310 may process the user plane data generated in the corresponding application layer using the data radio bearer configured using the radio resource configuration information. As another example, the controller 1310 may control the DRX operation of the UE according to the uplink or downlink period generated as a non-integer value by applying the DRX parameter configured using the radio resource configuration information to the UE.

Further, the controller 1310 controls the overall operation of the UE 1300 according to session/QoS/policy control for providing packet processing based on information generated in an application layer required to perform the above-described disclosure.

The transmitter 1320 and the receiver 1330 are used to transmit or receive signals or messages or data necessary for performing the above-described disclosure, with the base station or core network entity.

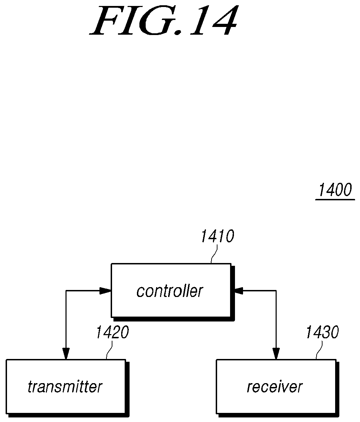

FIG. 14 is a block diagram illustrating a base station according to an embodiment.

Referring to FIG. 14, a base station 1400 processing an application data flow may include a receiver 1430 configured to receive, from a core network control plane entity, at least one information among assistance information for an application traffic characteristic, a PDU Set QoS parameter, identification information for associating a flow belonging to a multi-modal service and synchronization threshold information, transmitter 1420 configured to transmit a higher layer message including radio resource configuration information associated with at least one of the assistance information for the application traffic characteristic and the PDU set information to a UE, and a controller 1410 configured to control to transmit/receive user plane data generated in an application layer using the radio resource configuration information.

For example, the core network control plane entity may be a session management function (SMF). The SMF may allocate an IP address to the UE to provide a connection between the UE and an external data network and, at this time, may receive the IP address from the UPF or the external data network and provide the same to the UE. Alternatively, the core network control plane entity may be an AMF.

Further, the application data flow may be a PDU set having a high correlation between data flows such as XR or CG.

The receiver 1430 may receive various information from the core network control plane entity.

According to an embodiment, the receiver 1430 may receive assistance information for the application traffic characteristic. The assistance information may include at least one of uplink or downlink period information about the application data flow and jitter information associated with that period information. As described above, the application data flow may result in uplink or downlink activity at a non-integer period according to the traffic characteristics of the corresponding application. Further, the application data flow may introduce a certain level of jitter in uplink or downlink transmission/reception. Here, the period information may be set to a non-integer value.

According to another embodiment, the receiver 1430 may receive the PDU Set QoS parameter. The PDU Set QoS parameter may include a parameter value for setting the quality of the PDU Set generated in the application.

According to another embodiment, the receiver 1430 may receive identification information for associating the flow belonging to the multi-modal service. The multi-modal service refers to a service that exchanges information through various interfaces including visual and auditory senses, and the identification information may refer to an identifier used to associate data flows belonging to the corresponding multi-modal service.

According to another embodiment, the receiver 1430 may receive synchronization threshold information. For example, in order to avoid a negative influence on the user experience for the application, synchronized processing may be required between different single modal data/flows. In other words, a QoS characteristic/parameter for avoiding a negative influence on the user experience may be defined between different single-modal data/flow/media elements. For example, a multi-modal data delivery synchronization threshold/limit value/instruction information may be defined.

The above-described information may be received by the base station through an interface between the base station and the core network entity.

For example, the transmitter 1420 may transmit radio resource configuration information to the UE through an RRC message which is a higher layer message.

For example, the assistance information may include at least one of uplink or downlink period information about the application data flow and jitter information associated with the period information. As described above, the application data flow may result in uplink or downlink activity at a non-integer period based on the traffic characteristics of the corresponding application. Furthermore, the application data flow may introduce a certain level of jitter in uplink or downlink transmission/reception.

Accordingly, the period information may be set to a non-integer value. However, the period information may also be set to an integer value. By using the assistance information, the UE may perform effective application traffic processing by applying transmission/reception parameters that consider the characteristics of the corresponding application data flow.

According to another embodiment, the PDU set information may include at least one of a PDU Set sequence number, PDU Set end PDU indication information, and PDU Set importance information. For example, the PDU set information may include a PDU set sequence number used in the corresponding application. Alternatively, the PDU set information may include indication information that indicates the last PDU of the PDU set where the PDU set of the corresponding application is terminated. Alternatively, the PDU set information may include importance information applied to the PDU set. One PDU set may be set to have the same importance.

The UE may flexibly cope with dynamic traffic changes such as XR or CG by applying and processing the dynamic change of application data traffic considering the PDU set.

Meanwhile, the PDU set information may be included in the GTP-U header and transferred from the user plane entity to the base station.

According to another embodiment, the PDU set information may be included in the GTP-U header and transferred from the user plane entity to the base station. For example, the user plane entity may refer to a user plane function (UPF). Alternatively, the user plane entity may refer to any function or entity that performs a function of processing user plane data within the core network. The PDU Set information may be transferred from the user plane entity to the base station. Alternatively, the PDU Set information may be transferred from the base station to the user plane entity.

Meanwhile, the higher layer message may be an RRC message. For example, the higher layer message may include an N1 session management (SM) container including a PDU Set QoS parameter.

The UE may store the received radio resource configuration information in the UE or as the parameter value in the UE to be used the same when needed later.

According to an embodiment, the radio resource configuration information may include one or more of DRX configuration information supporting a non-integer value based on assistance information and data radio bearer configuration information associated with one or more logical channel configurations based on PDU Set information.

According to another embodiment, the UE may configure the DRX parameter by storing or applying the DRX configuration information supporting the non-integer value included in the wireless resource configuration information to the UE. Accordingly, a UE DRX operation suitable for the application data flow transmitted and received at a period set to the non-integer value may be performed.

According to another embodiment, the UE may configure the DRB of the UE using the DRB configuration information associated with the logical channel configuration included in the radio resource configuration information. The corresponding logical channel configuration is configured based on PDU Set information, and a logical channel and a DRB suitable for the application data flow may be configured in the UE.

The base station may use the radio resource configuration information to transmit and receive user plane data generated in the corresponding application layer. For example, the base station may process the user plane data generated in the corresponding application layer using the data radio bearer configured using the radio resource configuration information. As another example, the controller 1410 may control the transmission/reception operation according to the DRX operation of the UE according to the uplink or downlink period generated as a non-integer value using the DRX parameter of the UE configured using the radio resource configuration information.

Meanwhile, the transmitter 1420 may further transmit information indicating PDU Set support to the core network control plane entity after receiving the information from the core network control plane entity.

Further, the core network control plane entity may indicate protocol information or payload data type information for the application data flow to the user plane entity. Further, the user plane entity may perform PDU set marking on the user plane data using protocol information or payload data type information. Accordingly, it is possible to recognize the PDU Set even in the network including the core network to perform efficient application data flow control.

Further, the controller 1410 controls the overall operation of the base station 1400 according to session/QoS/policy control for providing packet processing based on information generated in an application layer required to perform the above-described disclosure.

The transmitter 1420 and the receiver 1430 are used to transmit or receive signals or messages or data necessary for performing the above-described disclosure, with the UE or core network entity.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority to Korean Patent Application Nos. 10-2022-0034052, filed on March 18, 2022, and 10-2023-0034109, filed on March 15, 2023, in the Korean Intellectual Property Office, the disclosures of which are incorporated by reference herein in their entireties. Further, the disclosures of patent applications filed in other countries than the United States and claiming priority for the same reason are also incorporated by reference herein.

## Claims

1. A method for processing an application data flow by a user equipment (UE), the method comprising:
receiving a higher layer message including radio resource configuration information associated with at least one of assistance information for an application traffic characteristic and PDU set information;
applying the radio resource configuration information to the UE; and
transmitting/receiving user plane data generated in an application layer using the radio resource configuration information.

2. The method of claim 1, wherein the assistance information includes uplink or downlink period information about the application data flow or jitter associated with the period information.

3. The method of claim 2, wherein the period information is set to a non-integer value.

4. The method of claim 1, wherein the PDU set information includes at least one piece of information among a PDU set sequence number, PDU set end PDU indication information, and PDU set importance information.

5. The method of claim 4, wherein the PDU set information is included in a GPRS tunneling protocol user plane (GTP-U) header and is transferred from a user plane entity to a base station.

6. The method of claim 1, wherein the radio resource configuration information includes one or more of discontinuous reception (DRX) configuration information supporting a non-integer value based on the assistance information and data radio bearer configuration information associated with one or more logical channel configurations based on PDU set information.

7. The method of claim 1, wherein the higher layer message includes an N1 session management (SM) container including a PDU set QoS parameter.

8. A method for processing an application data flow by a base station, the method comprising:
receiving, from a core network control plane entity, at least one piece of information among assistance information for an application traffic characteristic, a PDU set QoS parameter, identification information for associating a flow belonging to a multi-modal service, and synchronization threshold information;
transmitting, to a UE, a higher layer message including radio resource configuration information associated with at least one of the assistance information for the application traffic characteristic and PDU set information; and
controlling transmission and reception of user plane data generated in an application layer using the radio resource configuration information.

9. The method of claim 8, further comprising, after receiving from the core network control plane entity, transmitting information for indicating PDU set support to the core network control plane entity.

10. The method of claim 8, wherein the core network control plane entity indicates protocol information for the application data flow or payload data type information to a user plane entity.

11. The method of claim 10, wherein the user plane entity performs PDU set marking on the user plane data using the protocol information or the payload data type information.

12. A UE processing an application data flow, comprising:
a receiver receiving a higher layer message including radio resource configuration information associated with at least one of assistance information for an application traffic characteristic and PDU set information; and
a controller applying the radio resource configuration information to the UE and controlling to transmit/receive user plane data generated in an application layer using the radio resource configuration information.

13. The UE of claim 12, wherein the assistance information includes uplink or downlink period information about the application data flow or jitter associated with the period information.

14. The UE of claim 13, wherein the period information is set to a non-integer value.

15. The UE of claim 12, wherein the PDU set information includes at least one piece of information among a PDU set sequence number, PDU set end PDU indication information, and PDU set importance information.

16. The UE of claim 15, wherein the PDU set information is included in a GPRS tunneling protocol user plane (GTP-U) header and is transferred from a user plane entity to a base station.

17. The UE of claim 12, wherein the radio resource configuration information includes one or more of discontinuous reception (DRX) configuration information supporting a non-integer value based on the assistance information and data radio bearer configuration information associated with one or more logical channel configurations based on PDU set information.

18. The UE of claim 12, wherein the higher layer message includes an N1 session management (SM) container including a PDU set QoS parameter.
